# EUROPEAN PATENT APPLICATION

(11) **EP 4 414 922 A1**
(43) Date of publication of application: **14.08.2024**
(21) Application number: 22878551.5
(22) Date of filing: 05.10.2022
(51) Int. Cl.: G06Q 20/06

(54) **INFORMATION PROCESSING METHOD, PROGRAM, AND INFORMATION PROCESSING DEVICE**

(30) Priority: 06.10.2021 JP 2021165041
(71) Applicant: Socialgood, Inc., Tokyo, 100-0005 (JP)
(72) Inventor: TAKAOKA, Soichiro, Tokyo 100-0005 (JP)
(74) Representative: Cabinet Beaumont
(86) International application number: PCT/JP2022/037275
(87) International publication number: WO 2023/058683

(57) **Abstract**

Provide an information processing method and the like capable of procuring new users who use crypto assets.

An information processing method causing a computer to execute processing of issuing, to a first user, invitation information for inviting a second user; obtaining the invitation information from the second user; generating information on debt indicating that cryptocurrency is to be granted to the first user or the second user; and granting the cryptocurrency according to the debt in a case where a history indicative of the second user taking a predetermined action is obtained.

## Description

### [Technical Field]

The present invention relates to an information processing method, a program and an information processing apparatus.

### [Background Art]

The utilization of crypto assets (cryptocurrency) has been considered that is realized by use of the distributed ledger technology typified by block chain. Patent Document 1, for example, proposes an information processing apparatus capable of promoting use of electronic currency by depreciating the electronic currency including crypto assets and performing economic adjustment by appreciating electronic currency.

### [Prior Art Document]

### [Patent Document]

[Patent Document 1] Japanese Patent Application Laid-Open No. 2021-43758

### [Summary of the Invention]

### [Problem to be Solved by the Invention]

The invention according to Patent Document 1, however, does not consider procuring new users.

In one aspect, an object is to provide an information processing method and the like capable of procuring new users who use crypto assets.

### [Means for Solving Problems]

According to an aspect of the present disclosure , an information processing method causing a computer to execute processing of issuing, to a first user, invitation information for inviting a second user; obtaining the invitation information from the second user; generating information on debt indicating that cryptocurrency is to be granted to the first user or the second user; and granting the cryptocurrency according to the debt in a case where a history indicative of the second user taking a predetermined action is obtained.

### [Effects of the Invention]

In one aspect, new users who use crypto assets can be procured.

### [Brief Description of Drawings]

FIG. 1 A schematic view illustrating an example of the configuration of a tokenback system.
FIG. 2 A block diagram illustrating an example of the configuration of the server 1.
FIG. 3 A block diagram illustrating an example of the configuration of the terminal 2.
FIG. 4 An explanatory view showing an example of the record layouts of the user DB 141, the member shop DB 142, the recipient DB 143, the purchase history DB 144, the posting history DB 145 and the grant history DB 146.
FIG. 5 An explanatory view showing the general outline of token grant processing.
FIG. 6 An explanatory view showing an example of a top screen.
FIG. 7 An explanatory view showing an example of a screen shift at the time of a left swipe operation.
FIG.8 An explanatory view showing an example of a notification screen related to the tokens to be granted.
FIG.9 An explanatory view illustrating a top screen after token grant.
FIG. 10 An explanatory view illustrating an example of a screen shift at the time of a right swipe operation.
FIG. 11 A flowchart showing an example of the processing procedure to be executed by the terminal 2.
FIG. 12 A flowchart showing an example of the processing procedure to be executed by the server 1.
FIG. 13 An explanatory view showing an example of the record layout of an invitation DB 147.
FIG. 14 An explanatory view showing an example of a record layout of an invitation grant history DB 148.
FIG. 15 A flowchart showing an example of the processing procedure to be executed by the tokenback system according to the second embodiment.
FIG. 16 A flowchart showing an example of the processing procedure to be executed by the server according to the second embodiment.
FIG. 17 A flowchart showing an example of the processing procedure to be executed by the server according to the second embodiment.
FIG. 18A An explanatory view illustrating examples of top screens according to the second embodiment.
FIG. 18B An explanatory view illustrating examples of top screens according to the second embodiment.
FIG. 19 An explanatory view showing an example of a record layout of a dividend DB 149.
FIG. 20 An explanatory view showing an example of a record layout of an exchange limit DB 150.
FIG. 21 An explanatory view showing an example of a record layout of an interest rate DB 151.
FIG. 22 A flowchart showing an example of the processing procedure to be executed by the server according to the third embodiment.
FIG. 23 An explanatory view illustrating an example of a top screen according to the third embodiment.
FIG. 24 An explanatory view illustrating an outline of the fourth embodiment.
FIG. 25 A flowchart showing an example of the processing procedure to be executed by the tokenback system according to the fourth embodiment.
FIG. 26 An explanatory view illustrating an example of a top screen according to the variant.
FIG. 27 An explanatory view illustrating an example of a grant history screen.
FIG. 28 An explanatory view illustrating an example of a top screen according to the second variant.
FIG.29 An explanatory view illustrating an example of the dividend screen.
FIG. 30 An explanatory view illustrating an example of the record layout of a bonus setting DB.
FIG. 31 An explanatory view illustrating the record layout of a status recording DB.
FIG. 32 An explanatory view illustrating the record layout of a linked bonus DB.
FIG. 33 A flowchart showing an example of the procedure for bonus grant processing.
FIG. 34 A flowchart showing an example of the procedure for the eKYC processing.
FIG. 35 A flowchart showing an example of the procedure for the purchase amount confirmation processing.
FIG. 36 A flowchart showing an example of the procedure for the linked bonus grant processing.

### [Best Modes for Carrying out the Invention]

The present invention will be described below in detail sed on the drawings representing the embodiments thereof.

### (First Embodiment)

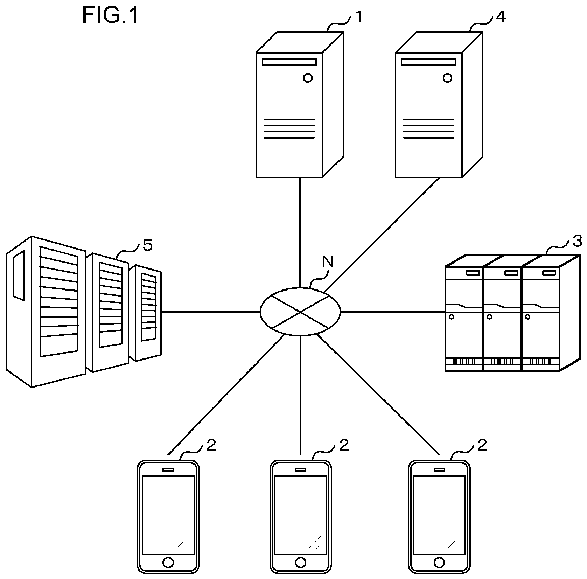

FIG. 1 is a schematic view illustrating an example of the configuration of a tokenback system. In the present embodiment, a tokenback system will be described in which a cryptocurrency (token) is granted to a user who purchased a commodity or a service (hereinafter, referred to as "commodity or the like") with legal currency at a predetermined member shop. The tokenback system includes an information processing apparatus 1, terminals 2, an exchange server 3, an EC (Electric Commerce) server 4 and an issuing server 5. These devices are interconnected so as to communicate with one another through a network N such as the Internet.

The information processing apparatus 1 is capable of various kinds of information processing and information transmission and reception, and is, for example, a server computer or a personal computer. In the present embodiment, the information processing apparatus 1 is a server computer and is read as a server 1 for the sake of simplicity below. The server 1 is regarded as a server computer of a manager who manages the present system, and performs cashback in a token (tokenback) to the users who purchased commodities or the like at member shops joining the present system. The token is a cryptocurrency unique to the present system and the transaction history of which is recorded in a block chain.

The cryptocurrency granted by the server 1 is not necessarily a unique token but may be an existing cryptocurrency such as Bitcoin (registered trademark) or Ethereum (registered trademark). In the present description, cryptocurrency has the same meaning as crypto assets, and cryptocurrency may be read as crypto assets.

The terminal 2 is a terminal device of each user who uses the present system and is, for example, a smartphone, a tablet terminal or a personal computer. In the present embodiment, description is made on the assumption that the terminal 2 is a smartphone provided with a touch panel. The terminal 2 is preinstalled with an application program for implementing a function according to the present system, and the terminal 2 performs later-described processing by executing the application program.

The exchange server 3 is a server computer of a cryptocurrency exchange service provider that provides a cryptocurrency exchange. The token according to the present embodiment is listed on one or more than one exchange, and the user can sell or buy the token at the exchange.

The EC server 4 is a server computer of an EC site (virtual shop) business operator that provides an electronic commerce transaction service. The present system is joined not only by business operators that handle the sale of commodities or the like at real shops but also by EC site business operators. Each user can receive tokens when purchasing a commodity or the like at a real shop or an EC site that is a member shop.

The issuing server 5 is a server computer that issues tokens according to the present embodiment and controls the upper limit of token issuance. In the present system, the issuing server 5 issues tokens and supplies them to a trading market (exchange, etc.). The upper limit of token issuance is determined at the issuing server 5, and the issuing server 5 adjusts the issuance quantity (issues new tokens) while referring to the supply and demand situation of the tokens at the market.

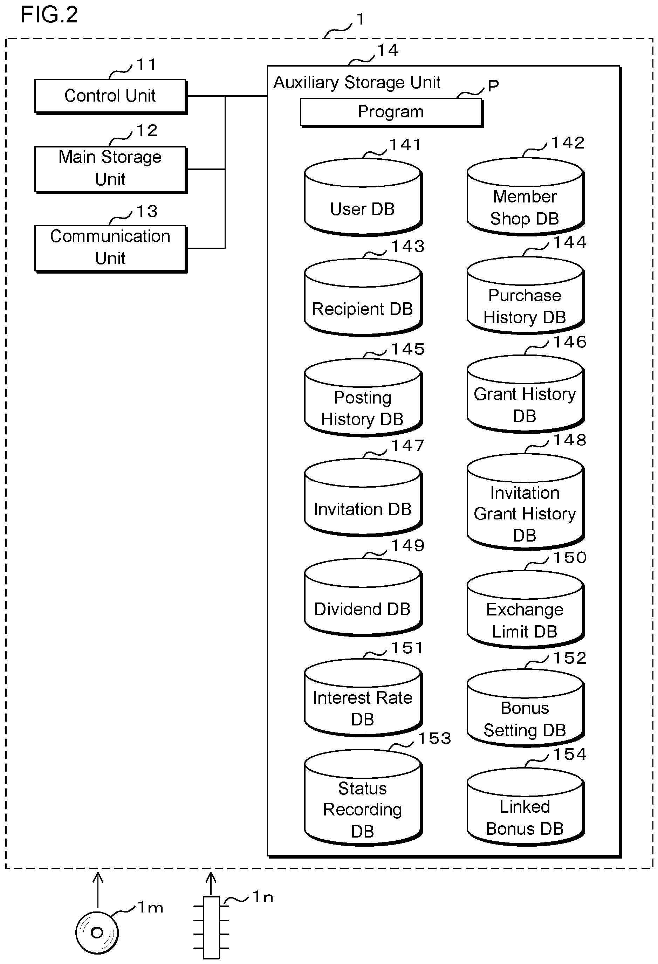

FIG. 2 is a block diagram illustrating an example of the configuration of the server 1. The server 1 is provided with a control unit 11, a main storage unit 12, a communication unit 13 and an auxiliary storage unit 14.

The control unit 11 has one or more arithmetic processing units such as a CPU (Central Processing Unit), an MPU (Micro-Processing Unit) or a GPU (Graphics Processing Unit), and performs various kinds of information processing, control processing and the like related to the server 1 by reading a program P1 stored in the auxiliary storage unit 14 and executing it. The control unit 11 executes the program P1 to realize functional parts including an issuance unit, an acquisition unit, a generation unit or a grant unit, or a first grant unit, a second grant unit, a third grant unit, a fourth grant unit or an output unit, for example. The main storage unit 12 is a temporary storage such as an SRAM (Static Random Access Memory), a DRAM (Dynamic Random Access Memory) or a flash memory, and temporarily stores data necessary for the control unit 11 to execute arithmetic processing. The communication unit 13 includes a processing circuit and the like for performing processing related to communication, and performs information transmission and reception with the terminal 2 and the like.

The auxiliary storage unit 14 is a large-capacity memory, a hard disk or the like, and stores the program P1 necessary for the control unit 11 to execute processing and other data. The auxiliary storage unit 14 also stores a user DB 141, a member shop DB 142, a recipient DB 143, a purchase history DB 144, a posting history DB 145 and a grant history DB 146, an invitation DB 147, an invitation grant history DB 148, a dividend DB 149, an exchange limit DB 150 and an interest rate DB 151. The user DB 141 is a database storing information on each user. The member shop DB 142 is a database storing information on each member shop (real shop or EC site). The recipient DB 143 is a database storing information on groups and the like registered as token recipients. As described later, in the present embodiment, in the case where tokens are granted to each user, some of the granted tokens are made to be donated to a recipient registered in the recipient DB 143.

The purchase history DB 144 is a database storing the history of purchase of commodities or the like by each user. The posting history DB 145 is a database storing the history of posting on an SNS (Social Networking Service) by each user. As described later, in the present embodiment, in the case where tokens are granted to each user, the tokens are granted on condition that a posting on an SNS is made. The grant history DB 146 is a database storing the history of token grant (the history of tokenback) to each user. From the invitation DB 147 to the interest rate DB 151 will be described in later embodiments.

The auxiliary storage unit 14 may be an external storage device connected to the server 1. Moreover, the server 1 may be a multicomputer formed of a plurality of computers or may be a virtual machine virtually constructed by software.

In the present embodiment, the server 1 is not limited to the above-described structure but may include, for example, an input part that accepts an operation input and a display part that displays an image. The server 1 may also be provided with a reading part that reads a portable storage medium 1m such as a CD (Compact Disk)-ROM or a DVD (Digital Versatile Disc)-ROM, and read the program P1 from the portable storage medium 1m and execute it. Alternatively, the server 1 may read the program P1 from a semiconductor memory 1n.

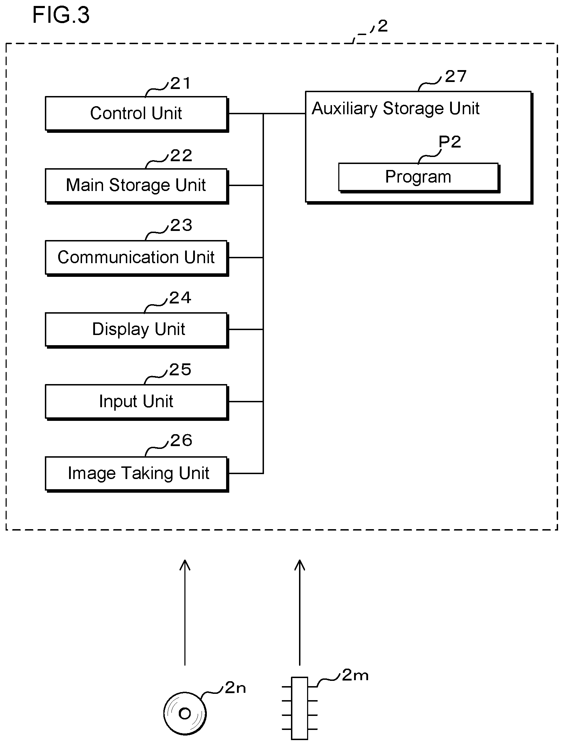

FIG. 3 is a block diagram illustrating an example of the configuration of the terminal 2. The terminal 2 is provided with a control unit 21, a main storage unit 22, a communication unit 23, a display unit 24, an input unit 25, an image taking unit 26 and an auxiliary storage unit 27.

The control unit 21 has one or more arithmetic processing units such as a CPU or an MPU, and performs various kinds of information processing, control processing and the like related to the terminal 2 by reading a program P2 stored in the auxiliary storage unit 27 and executing it. The main storage unit 22 is a temporary storage such as a RAM, and temporarily stores data necessary for the control unit 21 to execute arithmetic processing. The communication unit 23 includes an antenna, a processing circuit and the like for performing communication, and transmits and receives information to and from the server 1 and the like. The display unit 24 is a display device such as a liquid crystal display, an organic EL (Electro Luminescence) display, and displays an image provided by the control unit 21. The input unit 25 is an input interface such as a touch panel or a mechanical key, and accepts an operation input from the user. The image taking unit 26 is a camera provided with an imaging element such as a CMOS (Complementary Metal Oxide Semiconductor) image sensor, and performs image taking according to the operation input by the user. The auxiliary storage unit 27 is a non-volatile memory such as a ROM (Read Only Memory), and stores the program P2 necessary for the control unit 21 to execute processing as well as other data.

The terminal 2 may be provided with a reading unit for reading a portable storage medium 2n, read the program P2 from the portable storage medium 2n and execute it. Alternatively, the terminal 2 may read the program P2 from a semiconductor memory 2m.

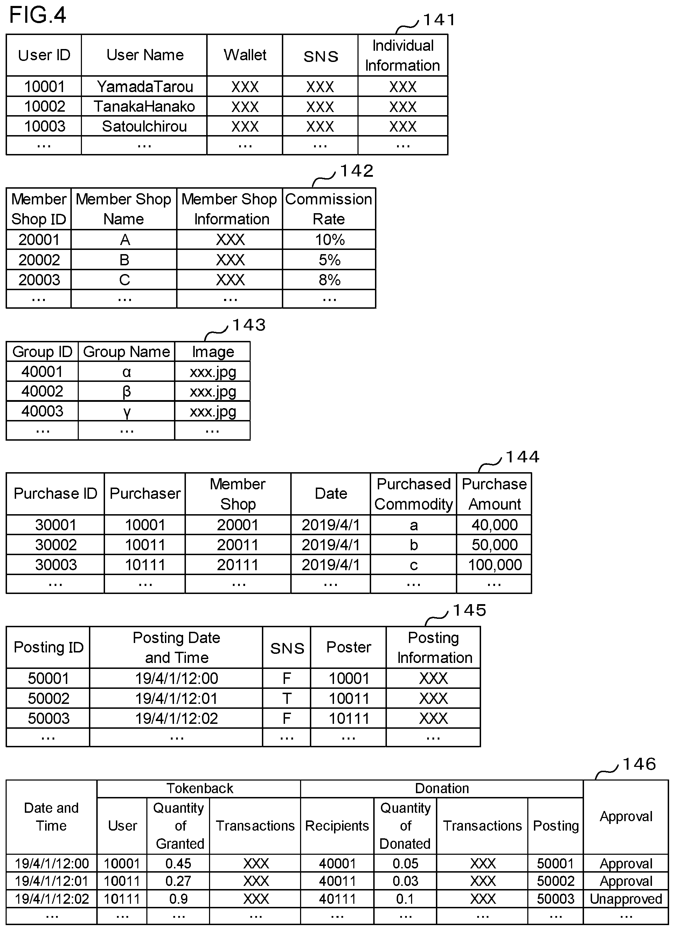

FIG. 4 is an explanatory view showing an example of the record layouts of the user DB 141, the member shop DB 142, the recipient DB 143, the purchase history DB 144, the posting history DB 145 and the grant history DB 146.

The user DB 141 includes a user ID column, a user name column, a wallet column, an SNS column and an individual information column. The user ID column stores user IDs for identifying users. The user name column, the wallet column, the SNS column and the individual information column store, in association with the user IDs, the users' names, the wallet information (for example, the public key) necessary for sending tokens to the users, information on the users' SNS accounts and the users' individual information (sex, age, nationality, etc.), respectively.

The member shop DB 142 includes a member shop ID column, a member shop name column, a member shop information column and a commission rate column. The member shop ID column stores member shop IDs for identifying member shops. The member shop name column, the member shop information column and the commission rate column store, in association with the member shop IDs, the names of the member shops, other information on the member shops and the rate of the commission collected from the member shops, respectively.

The recipient DB 143 includes a group ID column, a group name column and an image column. The group ID column stores group IDs for identifying groups and the like registered as recipients. The group name column and the image column store, in association with the group IDs, the names of the groups and the like as recipients and the image data that the users use for posting on SNSs when making donations to the groups and the like, respectively.

The purchase history DB 144 includes a purchase ID column, a purchaser column, a member shop column, a date column, a purchased commodity column and a purchase amount column. The purchase ID column stores purchase IDs assigned to individual purchase histories (purchase information) when the users purchased commodities or the like from member shops. The purchaser column, the member shop column, the date column, the purchased commodity column and the purchase amount column store, in association with the purchase IDs, the user IDs of the users as the purchasers, the member shop IDs of the member shops where the users purchased commodities or the like, the dates when the commodities or the like were purchased, the names of the purchased commodities or the like and the purchase amount, respectively.

The posting history DB 145 includes a posting ID column, a posting date and time column, an SNS column, a poster column and a posting information column. The posting ID column stores posting IDs respectively assigned to posting information posted on the SNSs by the users. The posting date and time column, the SNS column, the poster column and the posting information column store, in association with the positing IDs, the posting dates and times, the SNSs to which the postings were made, the user IDs of the users as the posters and the posting contents (data such as texts and images), respectively.

The grant history DB 146 includes a date and time column, a tokenback column, a donation column and an approval column. The date and time column stores the date when tokens were granted to the users. The tokenback column, the donation column and the approval column store, in association with the dates and times, information on the tokenback to the users, information on the donations and the presence or absence of token grant approval from the member shops, respectively. The tokenback column stores, for example, the user IDs of the users to which tokens are to be granted, the quantity of granted tokens and the transactions IDs created for granting (sending) the tokens. The donation column stores, for example, the group IDs of the groups and the like as the recipients, the quantity of donated tokens, the transaction IDs created for donating (sending) the tokens, and the posting IDs of the posting information about the users' postings on the SNSs with reference to the token donations.

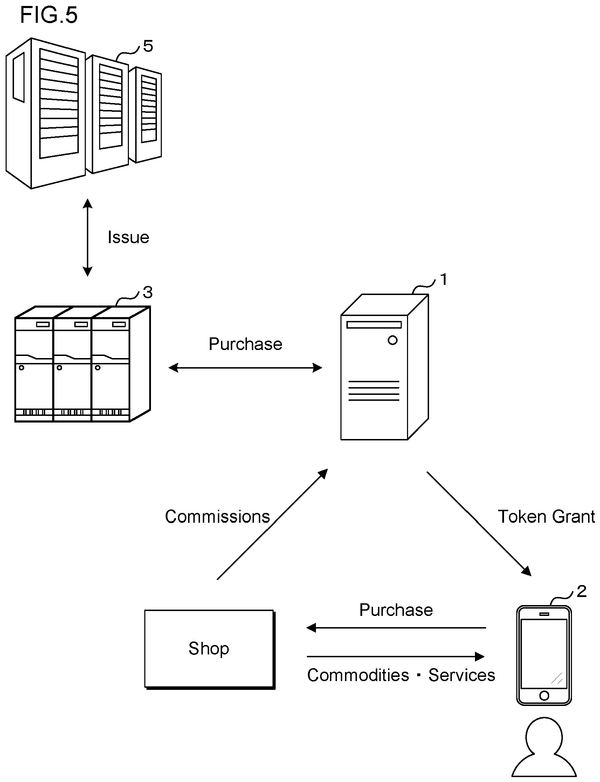

FIG. 5 is an explanatory view showing the general outline of token grant processing. With reference to FIG. 5, the general outline of the present system will be described.

As described above, in the present embodiment, tokens unique to the present system is handled. Tokens are supplied to the trading market, for example, by the issuing server 5 separate from the server 1, and the upper limit of issuance is controlled. At the exchange (trading market) provided by the exchange server 3, the users can sell or buy tokens circulating in the market.

The server 1 is a managing apparatus that manages the processing of cashback (tokenback) with the token as the medium, and grants the quantity of tokens corresponding to the purchase amount of the purchased commodities or the like to the users who purchased the commodities or the like.

The "token grant" referred to in the present embodiment may include both of the processing of registering a transaction for sending tokens to the user into a database (for example, the grant history DB 146) and the processing of broadcasting the transaction to a block chain network and actually sending the tokens to the user's wallet. In the former case, upon request from the terminal 2, the server 1 broadcasts the transaction registered in the database and sends the tokens granted to the user, to the wallet.

The present system is joined by a plurality of member shops such as real shops and EC sites (virtual shops), and when users purchase commodities or the like at member shops, the server 1 collects commissions corresponding to the purchase amounts of the commodities or the like from the member shops and grants tokens by using the commissions as the source of funds. The rate of commissions collected from the member shops is determined by the member shop DB 142. The server 1 calculates the commission by multiplying the purchase amount by the commission rate, and requests the member shop to pay the calculated commission. The server 1 performs tokenback by using the commission paid by the member shop as the source of fund.

In this case, based on the commission paid by the member shop, the server 1 outputs a purchase request (so-called offer) to purchase tokens to the exchange server 3 and purchases the tokens. That is, the server 1 procures the tokens from the cryptocurrency trading market by using the commission from the member shop as the source of fund.

The server 1 first obtains, from the exchange server 3, current price information indicative of the current price (the price per unit quantity when the token is converted into the legal currency) of the tokens. That is, the server 1 obtains, from the exchange server 3, data representative of the market price of the token at the trading market (exchange or the like). The server 1 may obtain information on the current price of the token not from the exchange server 3 but from an external site that publishes the information on the current price of cryptocurrency.

Referring to the current price information, the server 1 calculates the quantity of tokens that can be purchased with the commission from the member shop. The server 1 then outputs, to the exchange server 3, a purchase request to purchase the calculated quantity of tokens at the current price at the present. The server 1 purchases tokens from the holder of the tokens through the exchange server 3. The server 1 allocates the purchased tokens for grant to the user.

Since there is a time lag from the purchase of the commodity or the like by the user to the completion of the commission payment (receipt) from the member shop, the purchase request is output to procure (replenish) the tokens from the market in practice after the tokens are granted to the user. It is needless to say that the token may be granted to the user after the completion of procurement of the tokens.

Though tokens are procured from the exchange server 3 (exchange) in the present embodiment, for example, the server 1 may procure (purchase) tokens from the issuing server 5 as the token issuer.

As described above, in the case where the user purchases a commodity or the like at a member shop, the server 1 procures tokens from the market by using the commission from the member shop as the source of fund. This results in forcibly increasing the demand for the tokens at the market.

Moreover, in the case of granting tokens, the server 1 obtains holding information representative of the token holding situation by the user, and grants tokens according to the obtained holding information. The holding information is data representative of the holding quantity, holding period and the like of the tokens. The server 1, for example, obtains data such as the holding quantity, holding period and the like of the tokens held by the user with reference to the token grant history stored in the grant history DB 146. Alternatively, the server 1 may obtain the current holding information of the user from the block chain based on the wallet information stored in the user DB 141. The server 1 grants tokens based on the obtained holding information.

The server 1, for example, determines whether or not the holding quantity of the tokens held by the user is equal to or more than a predetermined quantity, and if determining that the user holds the predetermined quantity or more tokens, the server 1 grants tokens. Though the quantity of tokens made as the criterion for determination is not specifically limited, for example, the server 1 determines whether or not the user holds one token or more. As described above, the server 1 performs token back for users holding a predetermined quantity or more tokens. This makes the tokens themselves function as a kind of membership and provides users with an incentive to hold a predetermined quantity or more tokens.

The token holding quantity as the criterion for determination may be zero so that token back is performed for all the users.

Furthermore, the server 1 performs weighting based on the user's token holding information, and varies the quantity of tokens to be granted to the user. The server 1, for example, varies the grant quantity according to the holding quantity and holding period of tokens by the user.

The server 1, for example, increases the number of tokens granted to the user as the holding quantity increases. The server 1 also increases the number of tokens granted to the user as the holding period is elongated. This encourages the user to hold more tokens for a longer period of time.

The above-described processing provides the user with an incentive to continue to hold tokens. It can thereby be expected that the user continues to hold tokens without consuming them. Under this condition, the more commodities or the like the user purchases at member shops, the less the circulation quantity of the tokens circulated in the market by the above-described token procurement is, so that the property value (market price) of the existing tokens held by the user relatively increases. This makes the purchasing act itself contribute to the user's asset property value formation.

As described above, in the present system, while token grant (tokenback) is performed similarly to a general cashback service, it is encouraged to continue to hold the granted tokens without consuming them. Increase in token price can thereby be expected, so that not only a direct value by tokenback can be provided but also an indirect value (property value formation by price increase) can be provided.

In the case where the user obtained tokens for pay at the trading market (exchange, etc.) in order to further reduce the token circulation quantity, it is preferable to increase the quantity of tokens granted by purchase of a commodity or the like or increase the kinds of commodities or the like as the targets of token grant. That is, for the users having obtained tokens by a method other than tokenback (token grant by purchase of a commodity or the like), the server 1 increases the token grant quantity or increases the kinds of commodities or the like as the targets of the provision. This encourages the user to purchase tokens, so that the circulation quantity in the market can be further reduced.

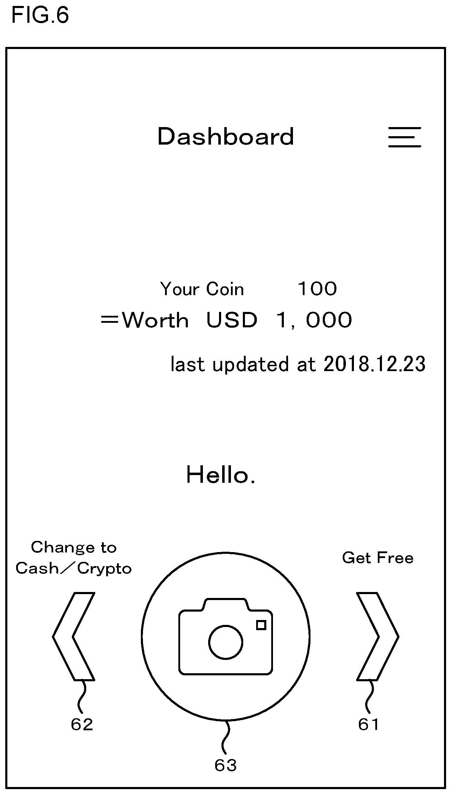

FIG. 6 is an explanatory view showing an example of a top screen. The following describes concrete processing contents of the present system while describing an example of an operation at the terminal 2.

As described above, the terminal 2 is installed with the application program according to the present system, and the application program is executed to perform the following processing. Screen display and operations may be performed on an API (Application Programmable Interface) such as a web browser. In FIG. 6, a top screen of the application is illustrated.

The top screen is a screen displaying the holding quantity of the tokens held by the user. As illustrated in FIG. 6, the terminal 2 displays, on the top screen, the holding quantity of the tokens currently held by the user and the amount equivalent to the legal currency when the tokens are converted into the legal currency complying with the user's nationality.

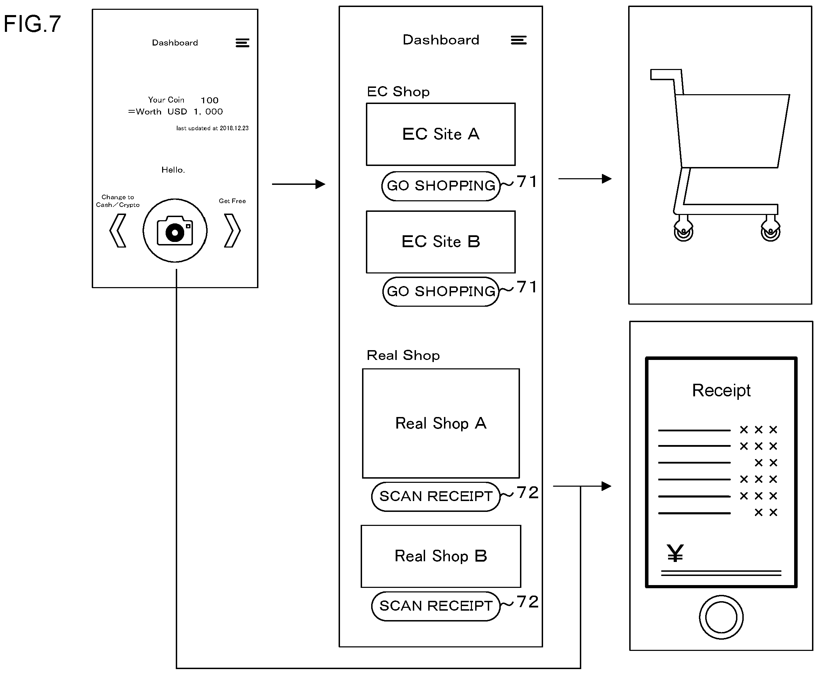

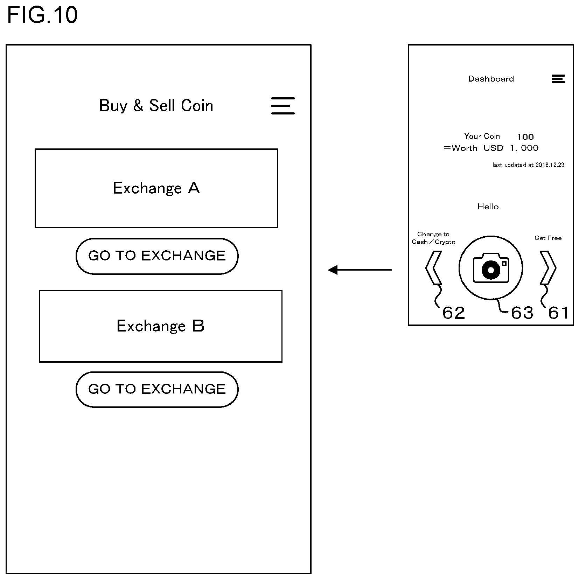

Moreover, the terminal 2 displays a left swipe icon 61, a right swipe icon 62 and a camera icon 63 on the top screen. The left swipe icon 61 (first object) is an icon to prompt an operation input of a left swipe (operation of sliding left on the screen) in order to shift to a later-described member shop list screen (see FIG. 7). The right swipe icon 62 (second object) is an icon to prompt an operation input of a right swipe (operation of sliding right on the screen) in order to shift to a later-described exchange screen (see FIG. 10). The camera icon 63 is an icon for shifting to a later-described mode to take an image of a receipt of a member shop (real shop).

While shift from the top screen to another screen is made by "swipe" in the present embodiment, the operation may be, for example, an operation called flick or drag as long as it is an operation of sliding on the screen. In addition, the two swiping directions are regarded as right and left, but not limited thereto. For example, the two swiping directions may be regarded as up and down directions and may be upper right and lower left directions. Moreover, the screen to be shifted by swiping may be selectable among multiple screens by the user. In addition, three or more swipe icons are provided, which allows shifting to three or more screens by swiping.

FIG. 7 is an explanatory view showing an example of a screen shift at the time of a left swipe operation. When a swipe operation of swiping left (first direction) on the top screen with the left swipe icon 61 is accepted, the terminal 2 shifts to the list screen (second screen) illustrated in the center of FIG. 7. The list screen is a display screen listing a plurality of member shops joining the present system. As illustrated in FIG. 7, on the list screen, member shops (first member shops) which are EC sites (virtual shops) providing business transaction services and member shops (second member shops) which are real shops are displayed in the form of a list.

The terminal 2 displays link buttons 71 in association with the EC sites on the list screen. In the case of accepting an operation input to a link button 71, the terminal 2 accesses the EC site (the EC server 4) associated with the operated link button 71. The destination of the access may be the home screen or the like of the EC site or the screen of each individual commodity through a direct shift with the link button 71.

The terminal 2 makes an application for purchase of a commodity or the like on the accessed EC site in response to the operation input from the user. When the user purchases a commodity or the like on the EC site, the server 1 obtains purchase information on the purchased commodity or the like from the EC server 4. The purchase information is data representative of the purchased commodity or the like, the purchase amount, the purchase date and the like. The server 1 stores the obtained purchase information into the purchase history DB 144.

Though the purchase information is obtained from the EC server 4 in the present embodiment, the server 1 may directly obtain the purchase information on the EC site from the terminal 2. Alternatively, the server 1 may obtain the purchase information by way of an ASP (Affiliate Service Provider) or the like. It is only necessary that the server 1 is capable of obtaining the purchase information directly or indirectly from the terminal 2 by way of the list screen of FIG. 7 regardless of the obtaining path.

Moreover, the terminal 2 displays scan buttons 72 in association with the member shops that are real shops on the list screen. In the case where an operation input to a scan button 72 is accepted on the list screen or when an operation input to the camera icon 63 is accepted on the top screen, the terminal 2 activates the image taking unit 26 and shifts to an image taking mode to take an image of a medium describing information (purchase information) on the commodity or the like purchased at a real shop.

For example, the terminal 2 shifts to an image taking mode to take an image of a receipt distributed to the user at the real shop. The terminal 2 takes an image of the receipt according to the operation input from the user, and performs character recognition on the taken image to extract purchase information such as the purchased commodity or the like, the purchase amount and the purchase date. The terminal 2 transmits the extracted purchase information to the server 1.

Though a receipt is read in the mode of the present embodiment, the target medium is not limited to a receipt but may be code information such as a QR code (registered trademark). That is, it is only necessary that the terminal 2 is capable of taking an image of a predetermined medium to extract purchase information, and the target thereof is not limited to paper medium where text is printed.

Moreover, though the purchase information at a member shop that is a real shop is obtained from the terminal 2 in the present embodiment, for example, the server 1 may obtain the purchase information from the POS (Point of Sales) system of the real shop.

In the case where the purchase information is obtained from the terminal 2 or the EC server 4, as described above, the server 1 requests the member shop to pay a commission corresponding to the purchase amount of the commodity or the like. The server 1 outputs a token purchase request to the exchange server 3 based on the commission paid by the member shop, and purchases tokens.

Moreover, the server 1 grants the quantity of tokens corresponding to the purchase amount of the commodity or the like to the user. For example, the server 1 obtains the information on the current price of the tokens from the exchange server 3, and converts the commission determined according to the purchase amount into the quantity of tokens according to the current price. The server 1 grants the converted quantity of tokens to the user.

As described above, the server 1 here obtains the token holding information by the user, and decides the quantity of tokens to be granted with reference to the obtained holding information. Specifically, the server 1 performs weighting according to the user's token holding quantity and holding period and decides the token grant quantity.

In the case of performing the above-described processing related to token grant, a case is considered where the upper limit of token issuance is reached and token grant to the user is impossible. "The upper limit of issuance is reached" can include not only a case where the upper limit of the issuance quantity is actually reached but also a case where the issuance quantity is close to the upper limit. In the case where the upper limit of issuance is reached and it is difficult to purchase (procure) tokens from the exchange server 3, the server 1 grants, to the user, another cryptocurrency or the legal currency instead of the token according to the present system. This makes it possible to handle the case where the upper limit of issuance is reached.

In the case where the upper limit of issuance is not reached or in the case where it is possible to purchase tokens from the exchange server 3, the server 1 grants the tokens of the quantity decided in the above to the user. The server 1 here makes the user donate some of the tokens to be granted, to a predetermined recipient (outsider), and grans tokens on condition that the user makes a posting indicating that the tokens are donated, on an SNS.

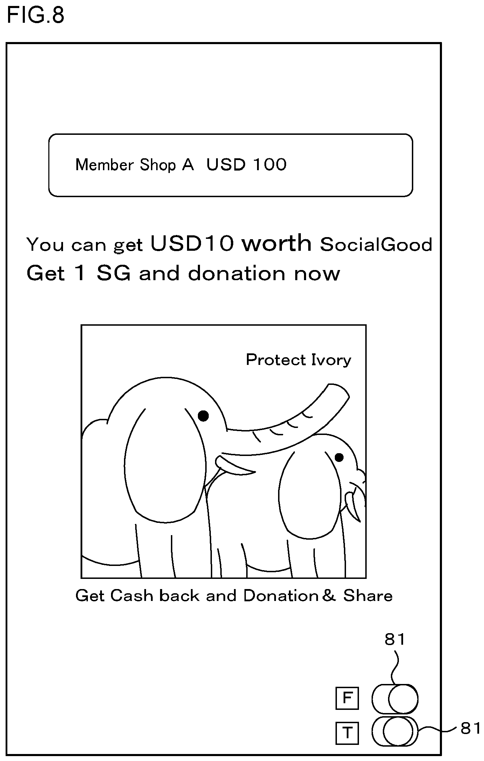

FIG. 8 is an explanatory view showing an example of a notification screen related to the tokens to be granted. After the purchase application at the EC site described with reference to FIG. 7 or the receipt reading is completed, the terminal 2 receives a notification from the server 1 and shifts to the screen (fourth screen) of FIG. 8. The screen is a display screen that displays the quantity of tokens to be granted to the user and prompts token donation and posting on an SNS.

As illustrated in FIG.8, the terminal 2 displays, in an upper part of the screen, the name of a member shop where the commodity or the like was purchased, the quantity of tokens to be granted by the purchase of the commodity or the like at the member shop, and the amount obtained by converting the tokens to be granted into the legal currency. The server 1 notifies the terminal 2 of the respective information and makes them displayed on the screen of FIG. 8.

Furthermore, the terminal 2 displays a message saying that some of the tokens to be granted should be donated and a posting indicating the donation should be made on an SNS. For example, as illustrated in FIG. 8, the terminal 2 displays an image of a recipient registered (stored) in the recipient DB 143 and displays a text saying that donation and positing should be made, at the lower part of the screen. Moreover, the terminal 2 displays toggle switches 81 for selecting an SNS on which posting is made, and causes the user to select one or more SNSs on which posting is made.

After the selection with the toggle switches 81 is completed, the terminal 2 shifts to a non-illustrated screen and accepts an input of a comment (text) to be posted on the SNS from the user. Then, the terminal 2 outputs, on the SNS, posting information including the image of the recipient illustrated in FIG. 8 in addition to the text input by the user on the user's own SNS account.

The server 1 calls the API of the SNS and determines whether or not the posting information is output, that is, whether or not posting on the SNS is completed. If posting is completed, the server 1 stores the posting information output from the terminal 2 to the SNS, into the posting history DB 145, in association with the posting date. Moreover, the server 1 grants tokens to the user. Specifically, the server 1 generates a transaction for sending tokens to the user's wallet and registers (stores) it into the grant history DB 146. The server 1 here registers the transaction with its status as "waiting for approval." The server 1 then accepts approval for token grant from the member shop (the EC server 4, or the like) that pays the commission. If the approval for token grant is accepted, the server 1 updates the status to "approved." If the status is updated to "approved," the server 1 outputs the transaction to the block chain in response to a request from the terminal 2 and sends the tokens excluding the donated ones to the user's wallet.

Moreover, the server 1 sends the tokens to be donated, to the recipient at a given time after the status is updated to "approved." The donation may be made in cash (legal currency) or the like instead of in tokens.

Though the recipient of the token donation and the quantity of tokens to be donated (donation amount) may be arbitrarily specified by the user, they may be automatically decided by the server 1. For example, the server 1 analyzes the user's tendency based on the purchase history of commodities or the like by the user, and decides the recipient and the donation quantity. For example, the server 1 previously associates commodities or the like with recipients and donation quantities, and decides the recipient and the donation quantity on contents basis according to the commodity or the like purchased by the user. Moreover, for example, the server 1 compares the target user's purchase history with other users' purchase histories, and decides the recipient and the donation quantity so that the donation is the same as the donation made by another user with a similar history by using collaborative filtering.

In addition, the server 1 may send the tokens while distributing them to a plurality of recipients in a single donation. The recipients and the distribution of the donation quantity here may be arbitrarily specified by the user as the above or may be automatically decided by the server 1 based on the purchase history or the like.

Though donation of tokens and posting on an SNS are a condition of token grant in the above, donation and posting are not a mandatory requirement, and tokens may be granted with no donation nor posting.

Though tokens are granted to the user after approval from the member shop in the above, tokens may be granted without approval from the member shop.

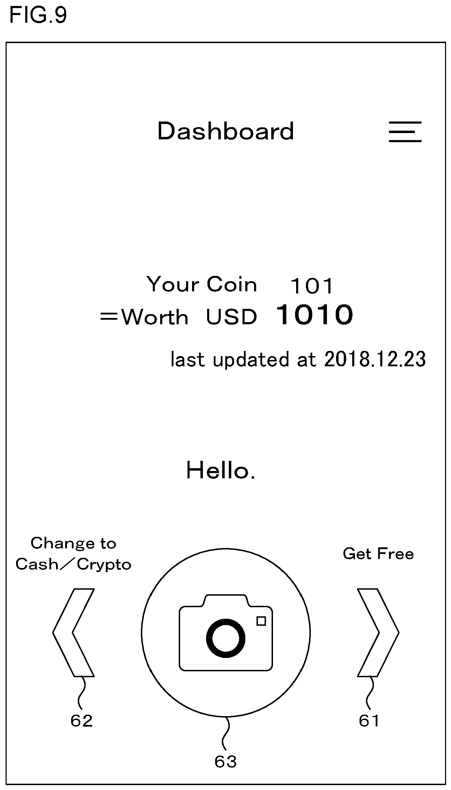

FIG. 9 is an explanatory view illustrating a top screen after token grant. In the case where posting is completed, the terminal 2 returns to the top screen also illustrated in FIG. 6. Here, the terminal 2 updates the top screen to display the total token holding quantity after token is granted. That is, the terminal 2 adds the quantity of tokens granted in the above to the previous holding quantity, and displays the updated quantity. This allows the user to immediately confirm that tokenback is given as a result of the purchase of the commodity or the like.

It is preferable for the terminal 2 to display the holding quantity displayed on the top screen, in a mode different from that in which the holding quantity before grant illustrated in FIG. 6 is displayed, by changing the display color or the like in order that the user can intuitively grasp that the holding quantity has been increased, for example. In FIG. 9, for convenience's sake, the condition where the display color is changed is depicted by the thick letters.

FIG. 10 is an explanatory view illustrating an example of a screen shift at the time of a right swipe operation. When a swipe operation of swiping from the left to right (second direction) with the right swipe icon 62 is accepted on the top screen, the terminal 2 displays a link screen (third screen, transaction screen) illustrated in FIG. 10. The link screen is a screen to list a plurality of exchanges where tokens can be bought and sold, and is a link page for accessing the sites of the exchanges. The terminal 2 accepts a selection input to select any of the exchanges on the link screen and accesses the site of the selected exchange. The terminal 2 can convert the tokens into the legal currency or another cryptocurrency at the accessed site (not illustrated) of the exchange. The terminal 2 can also make an additional purchase of tokens at the exchange.

Though only a shift to the site of the exchange is made in the example of FIG. 10, the present embodiment is not limited thereto. For example, it may be made possible for the terminal 2 to accept a designation input to designate the account of the exchange to which the tokens are to be sent and the quantity of tokens to be sent on the screen of FIG. 10 and send the tokens to the specified account (wallet). This enables the user to move tokens with a simple operation.

Moreover, when a selection input of an exchange is accepted on the link screen, the terminal 2 may provide a predetermined alert display to prompt the user to reconsider the change of the tokens. This makes it possible to encourage the user to continuously hold tokens.

As described above, by purchasing commodities or the like at member shops, users can obtain tokens expected to increase in price. In particular, in the present embodiment, tokens can be obtained with a simple operation on the terminal 2.

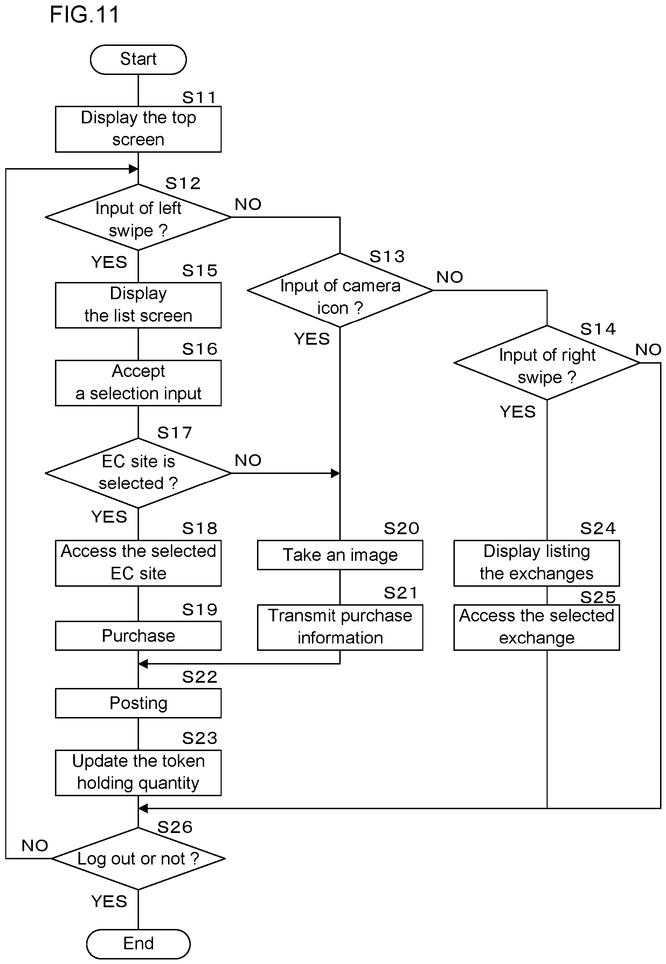

FIG. 11 is a flowchart showing an example of the processing procedure to be executed by the terminal 2. With reference to FIG. 11, the contents of the processing executed by the terminal 2 are described.

The control unit 21 of the terminal 2 displays the top screen (first screen) representing the holding quantity of the tokens (cryptocurrency) currently held by the user (step S11). The control unit 21 determines whether or not an operation input of left swipe, i.e., sliding left (first direction) is accepted on the top screen (step S12). If determining that an operation input of left swipe is not accepted (S12: NO), the control unit 21 determines whether or not an operation input to the camera icon 63 is accepted (step S13). If determining that an operation input to the camera icon 63 is not accepted (S13: NO), the control unit 21 determines whether or not an operation input of right swipe, i.e., sliding right (second direction) is accepted (step S14).

If determining that an operation input of left swipe is accepted (S12: YES), the control unit 21 displays the list screen (second screen) listing the member shops (step S15). Specifically, the control unit 21 displays one or more member shops (first member shops) of EC sites (virtual shops) and one or more member shops (second member shops) of real shops. The control unit 21 accepts a selection input to select any of the member shops displayed on the list screen (step S16).

The control unit 21 determines whether or not an EC site is selected at step S16 (step S17). If determining that an EC site is selected (S17: YES), the control unit 21 accesses the selected EC site (step S18). The control unit 21 performs processing related to the application for purchase of a commodity or the like at the EC site based on an operation input from the user (step S19). If the user purchases a commodity or the like at the EC site, the server 1 obtains purchase information on the commodity or the like purchased by the user from the EC server 4.

IfYES at step S13 or NO at step S17, the control unit 21 shifts to the image taking mode to take an image of a receipt (medium) describing the information on the purchase by the user at a real shop and takes an image of the receipt according to an operation input from the user (step S20). The control unit 21 extracts the purchase information from the taken image and transmits it to the server 1 (step S21).

After executing the processing of step S19 or S21, the control unit 21 obtains a notification related to the quantity of tokens to be granted from the server 1, shifts to the notification screen (fourth screen) for making a token donation and a posting on an SNS, and outputs posting information on the SNS based on an operation input from the user (step S22). The screen displayed at step S22 is a screen to prompt the user to donate tokens and make a posting indicating that donation has been made, on an SNS, and displays, for example, information (image or the like) on the recipient decided by the server 1 in addition to the quantity of tokens to be granted. The control unit 21 accepts input of arbitrary text from the user and outputs posting information including the input text and an image of the recipient and the like on the SNS.

When the posting information from the user is output to the SNS, the server 1 grants the quantity of tokens corresponding to the purchase amount or the like. The server 1 further sends some of the tokens to be granted to the user, to the recipient. The control unit 21 shifts to the top screen and updates the token holding quantity displayed on the top screen to the total token holding quantity after token is granted (step S23).

If determining that an operation input of right swipe is accepted on the top screen (S14: YES), the control unit 21 displays the link screen (third screen) listing the exchanges where tokens can be bought and sold (step S24). The control unit 21 accepts a selection input to select an exchange to be accessed and accesses the selected exchange (step S25).

After executing the processing of S23 or S25, or if NO at step S14, the control unit 21 determines whether to log out or not according to an operation input from the user (step S26). If determining not to log out (S26: NO), the control unit 21 returns the processing to step S12. If determining to log out (S26: YES), the control unit 21 ends the series of processing.

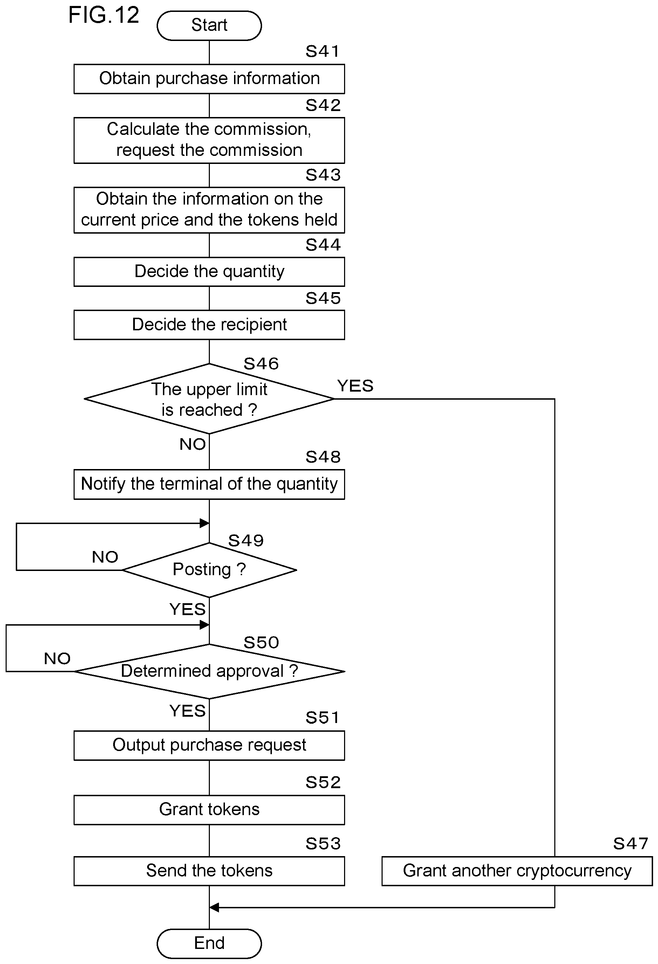

FIG. 12 is a flowchart showing an example of the processing procedure to be executed by the server 1. With reference to FIG. 12, the contents of the processing to be executed by the server 1 are described.

The control unit 11 of the server 1 obtains purchase information on the commodity or the like purchased by the user from the terminal 2 or the EC server 4 (step S41). The control unit 11 reads the commission rate of the member shop from the member shop DB 142 to calculate the commission corresponding to the purchase amount of the commodity or the like, and requests the member shop to pay the commission (step S42).

The control unit 11 obtains the information on the current price of the token (cryptocurrency) at the trading market and the information on the tokens held by the user (step S43). The current price information is data representative of the current price (the equivalent amount in legal currency) of the tokens and is data representative of the market price at the cryptocurrency trading market (exchange, etc.). The holding information is data representative of the token holding situation by the user and is, for example, data representative of token holding quantity and holding period.

The control unit 11 decides the quantity of tokens to be granted to the user based on the purchase information, the current price information, the holding information and the like (step S44). Specifically, the control unit 11 converts the commission (price in legal currency) obtained by multiplying the purchase amount of the commodity or the like by the commission rate of the member shop, into the quantity of tokens according to the current price of the tokens. Moreover, the control unit 11 performs weighting according to the user's holding information and decides the grant quantity so that the larger the holding quantity and the longer the holding period, the larger the grant quantity is.

The control unit 11 further decides the recipient to which some of the tokens to be granted to the user is sent (step S45). For example, the control unit 11 decides the recipient from the purchase history of commodities or the like by the user.

The control unit 11 obtains information on the current token issuance quantity from the issuing server 5 and determines whether or not the upper limit of token issuance is reached (step S46). If determining that the upper limit of issuance is reached (S46: YES), the control unit 11 grants, to the user, another cryptocurrency different from the token of the present system or the legal currency (step S47) and ends the series of processing.

If determining that the upper limit of issuance is not reached (S46:NO), the control unit 11 notifies the terminal 2 of the quantity of tokens to be granted that is decided at step S44 (step S48). Specifically, the control unit 11 notifies the terminal 2 of the quantity of tokens to be granted and the information on the recipient decided at step S45.

The control unit 11 determines whether or not posting on an SNS by the user has been completed (step S49). If determining that posting has not been completed (S49:NO), the control unit 11 waits for the processing. If determining that posting has been completed (S49: YES), the control unit 11 determines whether or not approval of token grant is accepted from the member shop (Step S50). If determining no approval of token grant is accepted (S50:NO), the control unit 11 waits for the processing.

If determining that approval of token grant is accepted (S50: YES), the control unit 11 outputs a token purchase request based on the commission calculated at step S42, to the exchange server 3 (step S51). Furthermore, the control unit 11 grants tokens excluding tokens to be donated to the user (step S52). Moreover, the control unit 11 sends the tokens to be donated, to the recipient decided at step S45 (step S53) and ends the series of processing.

Though the quantity of tokens granted to the user is determined according to the commission paid from the member shop in the present embodiment, tokenback may be performed while the quantity of tokens granted to the user is determined irrespective of the quantity of the commission.

Though token buyback is performed through an exchange in the present embodiment, buyback through an exchange is not necessarily but the server 1 may purchase tokens directly from a token holder.

Though tokens are granted according to the information on the purchase of a commodity or the like by the user in the above, the present embodiment is not limited thereto. For example, the server 1 may grant tokens by using, as a trigger, the user's action other than the purchase of a commodity or the like such as access to an Internet advertisement by the user or use of a specific application by the user. That is, the purchase of a commodity or the like is an example of the trigger of token grant, and tokens may be granted in response to a different action by the user.

From the above, according to the first embodiment, the terminal 2 shifts to the member shop list screen by a simple swipe operation on the top screen, outputs purchase information to the server 1 directly by receipt reading or the like or indirectly by way of the EC server 4, receives token grant and presents, to the user, the granted holding quantity. As described above, tokenback can be given with a simple operation, so that consumers (users) can be appropriately assisted.

Furthermore, according to the first embodiment, buying and selling of tokens can be performed by accessing an exchange with a simple swipe operation on the top screen.

Moreover, according to the first embodiment, tokenback can be received in accordance with both member shops which are EC sites (virtual shops) and member shops which are real shops.

In addition, according to the first embodiment, the present system can be implemented as a measure for social contribution by rendering token donation a condition of tokenback.

Moreover, according to the first embodiment, the present system can be made known to general consumers by rendering posting on an SNS a condition of tokenback.

### (Second Embodiment)

The present embodiment describes an example where, in the case where a first user transmits introduction information of the tokenback system to a second user and the second user makes registration to the tokenback system, tokens are provided to the second user. Though the second user is described as a user, the second user is not necessarily a user at the time when being given introduction to the tokenback system from the first user. Contents overlapping with those in the first embodiment are denoted by the same reference codes and are not described here.

In the following description, while the terminal to be used by the first user is referred to as a first terminal 2 and has the configuration as illustrated in FIG. 3. The terminal to be used by the second user is referred to as a second terminal 9 and has the configuration as illustrated in FIG. 3. They are thus not illustrated here. The second terminal 9 is provided with a control unit 91, a main storage unit 92, a communication unit 93, a display unit 94, an input unit 95, an image-taking unit 96 and an auxiliary storage unit 97.

In the present embodiment, the first user invites the second user to the tokenback system. The second user is notified that he or she can receive token grant as a reward for accepting the invitation. When purchasing a commodity or the like at a member shop as a result of the invitation, the second user can receive token grant in reward for accepting the invitation as well as tokenback given by the purchase. In the case where the second user purchases a commodity or the like at the member shop, tokens may be granted to the first user having invited the second user. Though the condition of the second user being given token grant is described as purchase of a commodity or the like at a member shop, it is not limited thereto. The second user may also be given tokens when using a paid service at a member shop.

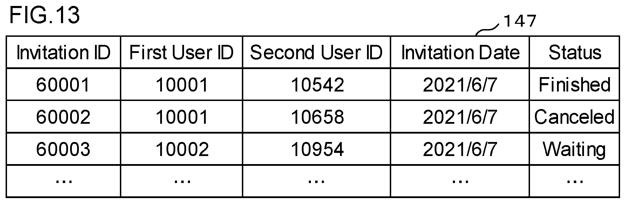

FIG. 13 is an explanatory view showing an example of the record layout of an invitation DB 147. The invitation DB 147 includes an invitation ID column, a first user ID column, a second user ID column, an invitation date column and a status column. The invitation ID column stores invitation IDs respectively assigned to invitation information indicating the first user inviting the second user. The first user ID column, the second user ID column, the invitation date column and the status column store, in association with the invitation ID, the first user IDs of the first users having invited other users, the second user IDs of the second users having accepted invitation from other users, the dates when invitations are accepted and the statuses of the invitations, respectively. The status column stores "waiting" that indicates having invited the second user and waiting for the second user purchasing a commodity or the like at the member shop, "finished" indicating that the second user purchased a commodity or the like at the member shop, and "canceled" indicating that token grant is canceled since the second user having accepted an invitation did not purchase a commodity at the member shop within a predetermined period.

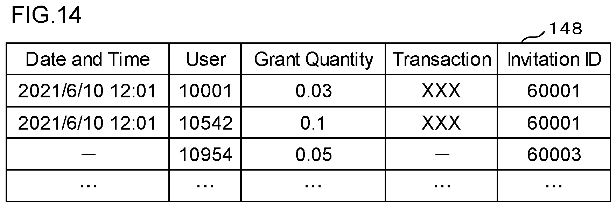

FIG. 14 is an explanatory view showing an example of a record layout of an invitation grant history DB 148. The invitation grant history DB 148 includes a date and time column, a user column, a grant quantity column, a transaction column and an invitation ID column. The date and time column stores the dates and the times when tokens were granted to the second users who accepted invitations. In the case where tokens are also granted to the first users who having invited the second users, the date and time column stores the dates and the times when tokens were granted to the first users. The user column, the grant quantity column, the transaction column and the invitation ID column respectively store, in association with the dates and times, the user IDs of the first users or the second users who receive tokens, the quantities of tokens granted to the users, the transaction IDs created for granting tokens and invitation IDs of invitation information indicating the first user inviting the second user related to token grant.

The invitation grant history DB 148 may create a new record before token grant according to the invitation is performed. This makes it possible to present to the second user the quantity of tokens granted if the second user purchases a commodity or the like as a result of the invitation. In the case where tokens are granted to the first user as well, a new record may be created. That is, a new record of the invitation grant history DB 148 is created when the server generates invitation information indicative of an invitation from the first user to the second user. Since tokens have not been granted here, no values are set to the date and time column and the transaction column, or specific values indicating null are set thereto.

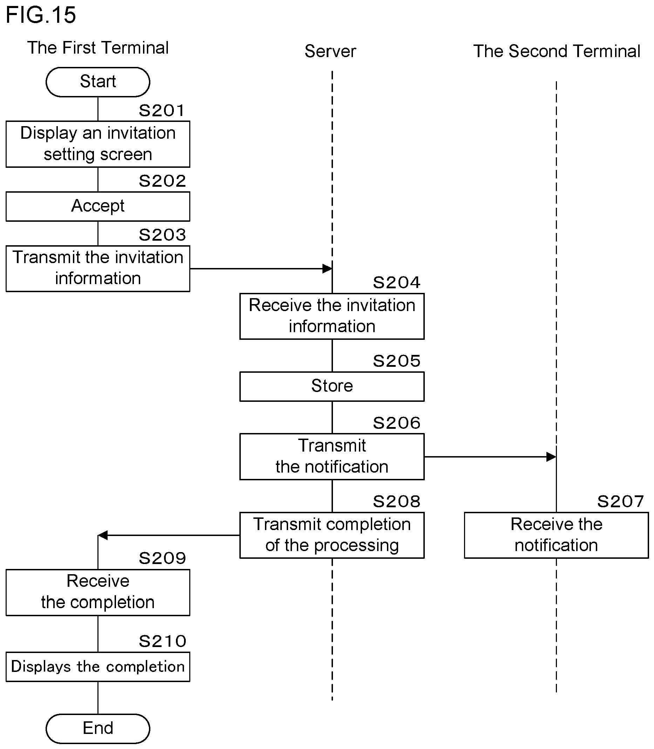

FIG. 15 is a flowchart showing an example of the processing procedure to be executed by the tokenback system according to the second embodiment. If selection of an invitation is accepted from the menu of the top screen displayed on the first terminal, the tokenback system executes the following processing. The control unit 21 of the first terminal 2 displays an invitation setting screen (step S201). The control unit 21 accepts an input of invitation information (step S202). The control unit 21 transmits the accepted invitation information to the server 1 (step S203). The control unit 11 of the server 1 receives the invitation information (step S204). The control unit 11 stores the invitation information in the invitation DB 147 and the quantity of tokens to be granted to the first user or the second user in the invitation grant history DB 148 (step S205). The control nit 11 transmits the notification indicating that an invitation is accepted, to the second terminal 9 (step S206). The control unit 91 of the second terminal 9 receives the notification (step S207). The control unit 91 transmits completion of the invitation processing to the first terminal 2 (step S208). The control unit 21 of the first terminal 2 receives the completion (step S209). The control unit 21 displays the completion (step S210) and ends the processing. In the case where tokens are granted to the second user, the quantity of tokens to be granted may preferably be included in the invitation information. The tokens to be granted to the second user are to be granted at the time when the invitation information is transmitted, and the grant is fixed at the time when the second user purchases a commodity or the like at a member shop. The quantity of tokens to be granted to the first user may be varied depending on the holding quantity of the tokens held by the first user. The quantity of tokens to be granted to the second user may be varied depending on the holding quantity of the tokens held by the second user. In the case where the second user is not a user of the tokenback system at the time of accepting an invitation, or in the case where the holding quantity of the tokens is zero, the quantity of tokens to be granted to the second user may be decided according to the holding quantity of the tokens held by the first user.

It may be considered that the record including the number of tokens to be granted to the first user or the second user that is stored in the invitation grant history DB 148 stores debt information similar to debt agreements with conditions precedent. This is because the second user who accepted the invitation from the first user is promised to be given tokens, but the second user cannot request the administrator to substantially receive tokens until he or she purchases a commodity or the like at a member shop. Likewise, this is because the first user cannot request the administrator to substantially receive tokens until the second user purchases a commodity or the like at a member shop.

It can also be said that the debt information stored in the invitation grant history DB 148 is subject to conditions resolutive. This is because, as described below, in the case where the second user who accepted an invitation from the first user does not purchase a commodity or the like at a member shop within a predetermined period from the invitation date, the tokens to be granted as a result of the invitation being canceled.

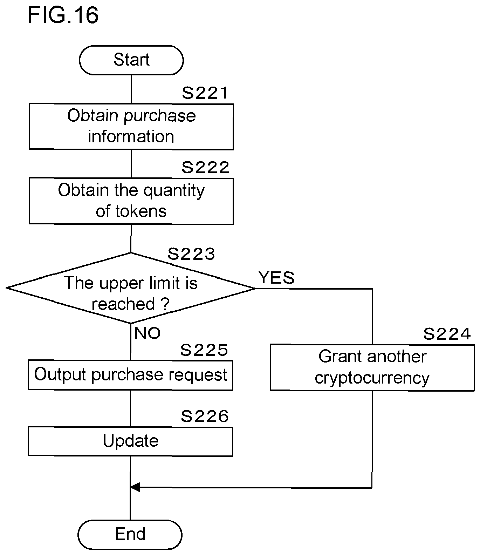

FIG. 16 is a flowchart showing an example of the processing procedure to be executed by the server according to the second embodiment. The processing shown in FIG. 16 is assumed to be executed after the second user having accepted an invitation from the first user purchases a commodity or the like at the member shop. The control unit 11 of the server 1 obtains purchase information on the commodity or the like purchased by the second user from the second terminal 9 or the EC server 4 (step S221). The control unit 11 obtains the quantity of tokens to be granted to the first user or the second user from the invitation grant history DB 148 (step S222). The control unit 11 obtains information on the current token issuance quantity from the issuing server 5, and determines whether or not the upper limit of token issuance is reached if the obtained quantity of tokens is issued (step S223). If determining that the upper limit of issuance is reached (S223: YES), the control unit 11 grants, to the user, another cryptocurrency different from the token of the present system or the legal currency (step S224), and ends the series of processing.

If determining that the upper limit of issuance is not reached (S223: NO), the control unit 11 outputs a token purchase request based on the quantity obtained at step S222, to the exchange server 3 (step S225). The control unit 11 updates the invitation DB 147 and the invitation grant history DB 148 (step S226) and ends the series of processing. The control unit 11 updates the value in the status column of the invitation DB 147 to "finished." In addition, the control unit 11 sets values in the date and time column and the transaction column of the invitation grant history DB 148.

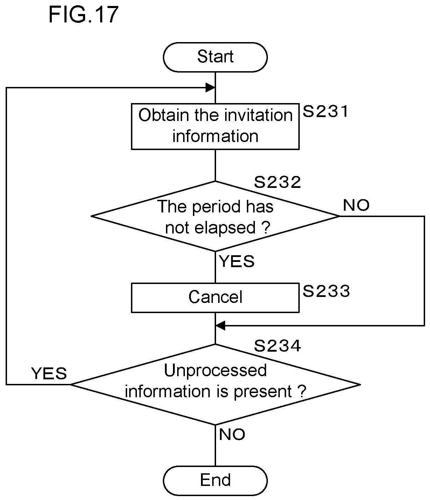

FIG. 17 is a flowchart showing an example of the processing procedure to be executed by the server according to the second embodiment. The processing in FIG. 17 relates to processing, in the case where the second user having accepted an invitation from the first user did not purchase a commodity or the like at a member shop within a predetermined period, for canceling the tokens to be granted after a lapse of a predetermined period. The server 1 executes the processing shown in FIG. 17 such as daily batches for each predetermined time period. The control unit 11 obtains the invitation information with the value of "waiting" in the status column from the invitation DB 147 (step S231). The control unit 11 obtains the invitation date included in the invitation information, compares the invitation date with the current date, and determines whether the period during which tokens grant can be received has not elapsed (step S232). For example, in the case where the period is within one month from the invitation date and the invitation date is June 7, July 7 is the last day of the period. If determining the token grant period related to the invitation information has not elapsed (S232: NO), the control unit 11 returns the processing to step S234. If determining the token grant period related to the invitation information has elapsed (S232: YES), the control unit 11 cancels the invitation information (step S233). The control unit 11 updates the value in the status column of the invitation information to "canceled." The control unit 11 determines whether or not unprocessed invitation information is present (step S234). If determining that unprocessed invitation information is present (S234: YES), the control unit 11 returns the processing to step S231 to perform the processing on the unprocessed invitation information. If determining that unprocessed invitation information is not present (S234: NO), the control unit 11 ends the series of processing.

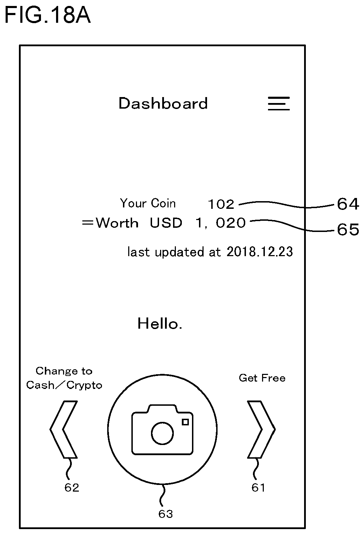

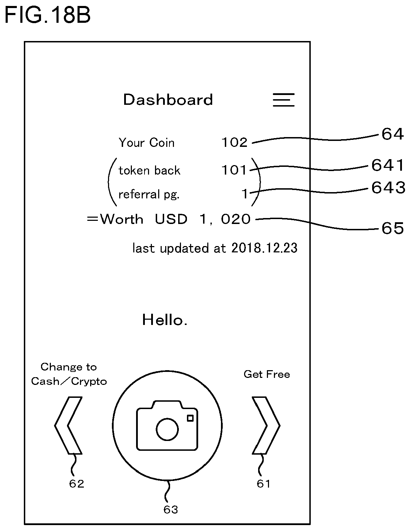

FIG. 18A and 18B are explanatory views illustrating examples of top screens according to the second embodiment. As in FIG. 6 and FIG. 9, the top screens illustrated in FIG. 18A and FIG. 18B display the holding quantity of the tokens held by the user. The top screens display the holding quantity 64 of the tokens currently held by the user and the amount 65 equivalent to the legal currency when the tokens are converted into the legal currency complying with the user's nationality. FIG. 18A illustrates a situation where token grant according to the invitation information is received, which is changed from the situation displayed on the top screen illustrated in FIG. 9. According to the invitation information, tokens granted if another user purchases a commodity or the like at a member shop are added and displayed, which enables confirmation that the token grant is given.

In FIG. 18B, the breakdown of the holding quantity 64 of the tokens is displayed. The holding quantity held by tokenback 641 and the holding quantity 643 granted by inviting another user are displayed. As to the holding quantity 642, the holding quantity to be granted, i.e., the holding quantity to be granted if another user having invited purchases a commodity or the like at the member shop may also be displayed in addition to the holding quantity fixed to be granted. The holding quantity fixed to be granted and the holding quantity to be granted are discernibly displayed. Here, the holding quantity to be granted stops to be displayed after a certain period of time because the grant is fixed or canceled.

According to the second embodiment, in the case where the first user invites the second user to the tokenback system, and the second user purchases a commodity or the like at a member shop as a result of the invitation, the first user receives token grant. As such, the first user intends to invite the second user to the tokenback system, which can increase the number of users in the tokenback system. In addition, the second user who receives the invitation can also receive token grant, which motivates the second user to purchase a commodity or the like at the member shop.

When performing the processing in FIG. 16, the server 1 executes the processing similar to that in FIG. 17 to confirm whether or not the second user purchased a commodity or the like at the member shop within a specified period. If the specified period has not elapsed, the server 1 grants tokens to the first user or the second user. If the specified period has elapsed, the server 1 does not grant tokens to the first user or the second user.

### (Third Embodiment)

The present embodiment describes an example where in the case of taking a certain action, the user holding tokens receives a reward. Contents overlapping with those in the embodiment described above are denoted by the same reference codes and are not described here. In the following description, an example of a certain action of the user for which the user can receive a reward includes logging into the tokenback system.

Since the reward obtainable by the user is similar to dividends in general, the reward is referred to as "dividend coins" below. Note that "dividend coins" are not limited to distributing profits such as dividends received by shareholders.

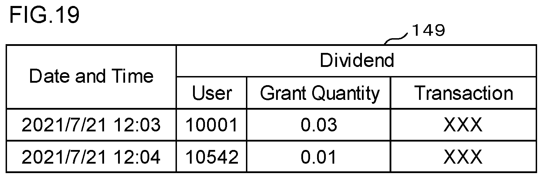

The database to be used in the present embodiment is first described. FIG. 19 is an explanatory view showing an example of a record layout of a dividend DB 149. The dividend DB 149 includes a date and time column, a user column, a grant quantity column and a transaction column. The date and time column stores the dates and the time when dividend coins were granted as a reward to the user who took a certain action. The user column, the grant quantity column and the transaction column store, in association with the dates and the time, the user IDs of the users to which dividend coins are granted, the quantity of dividend coins granted to the user and the transaction IDs created for granting the dividend coins, respectively.

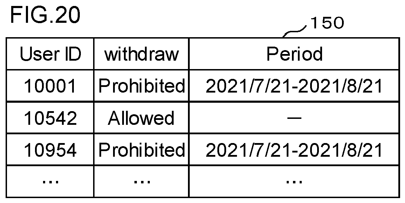

FIG. 20 is an explanatory view showing an example of a record layout of an exchange limit DB 150. The exchange limit DB 150 includes a user ID column, a withdraw column and a period column. The user ID column stores user IDs for identifying users. The withdraw column and the period column store, in association with the user IDs, information on whether or not withdrawal is prohibited and the period of prohibition if it is prohibited, respectively.

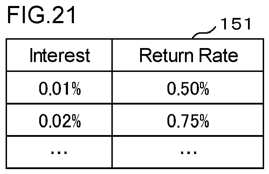

FIG. 21 is an explanatory view showing an example of a record layout of an interest rate DB 151. The interest rate DB 151 includes an interest rate column and a return rate column. The interest rate column stores the interest rates used to calculate the quantity of dividend coins to be granted to the user. The interest rate corresponds to a ratio relative to the total quantity of tokens held by the user, for example. The return rate column stores, in association with the interest rates, the return rates used when calculating the token to be granted in the case where the user purchases a commodity or the like at a member shop. For example, the return rate stores the ratio relative to the quantity of tokens that can be purchased with the commission from the member shop.

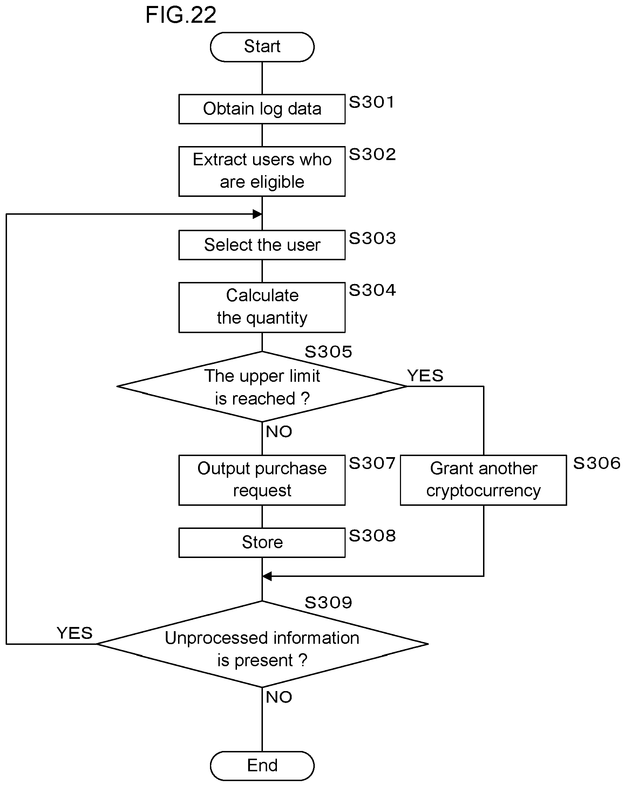

FIG. 22 is a flowchart showing an example of the processing procedure to be executed by the server according to the third embodiment. This relates to processing of granting dividend coins to the user who logged into the tokenback system every predetermined period, as an example of a certain action involved with reception of the grant of dividend coins. The processing shown in FIG. 22 is performed on a weekly basis, for example. The control unit 11 of the server 1 obtains log data of the tokenback system (step S301). The log data is a log that stores the log-in date and time and the log-out date and time (action history) of the user in association with the user ID. Since this log corresponds logs normally collected in the client server system, detailed description is not made here. The control unit 11 extracts users who are eligible to receive the grant of the dividend coins from the obtained logs (step 302). In the case where processing is performed every Monday, the users who logged in from the previous Monday through Sunday are extracted. The control unit 11 selects the user to be processed (step S303). The control unit 11 calculates the quantity of dividend coins to be granted to the selected user (step S304). The control unit calculates the quantity based on the holding quantity of the tokens held and the interest rate selected by the user. The interest rate selected by the user is stored, for example, in the user DB 141. The control unit 11 obtains information on the current token issuance quantity from the issuing server 5, and determines whether or not the upper limit of token issuance is reached when the quantity of tokens corresponding to the obtained quantity of the dividend coins are issued (step S305). If determining that the upper limit of issuance is reached (S305: YES), the control unit 11 grants, to the user, another cryptocurrency different from the tokens of the present system or the legal currency (step S306) and shifts the processing to step S309.

If determining that the upper limit of issuance is not reached (S305: NO), the control unit 11 outputs a purchase request for a quantity of tokens based on the dividend coins calculated at step S304, to the exchange server 3 (step S307). The control unit 11 stores the dividend coins to be granted in the dividend DB 149 (step S308). When performing processing at step S308, the control unit 11 updates the value in the period column for the exchange limit DB 150. For example, after the dividend coins are granted, the exchange is prohibited for one week. The prohibition period may vary according to the interest rate. The control unit 11 determines whether or not an unprocessed target user is present (step S309). If determining that an unprocessed target user is present (S309: YES), the control unit 11 returns the processing to step S303 to perform the processing on the unprocessed target user. If determining that an unprocessed target user is not present (S309: NO), the control unit 11 ends the series of processing.

As described in the processing at step S304, the interest rate specified by the user is calculated when calculating the grant quantity of dividend coins, which results in change of the quantity of tokenback when the user purchases a commodity or the like at a member shop. This is because the return rate used for calculating the quantity varies. The relationship between the interest rate and the return rate is defined in the interest rate DB 151. The return rate may be stored in the user DB 141 as in the interest rate.

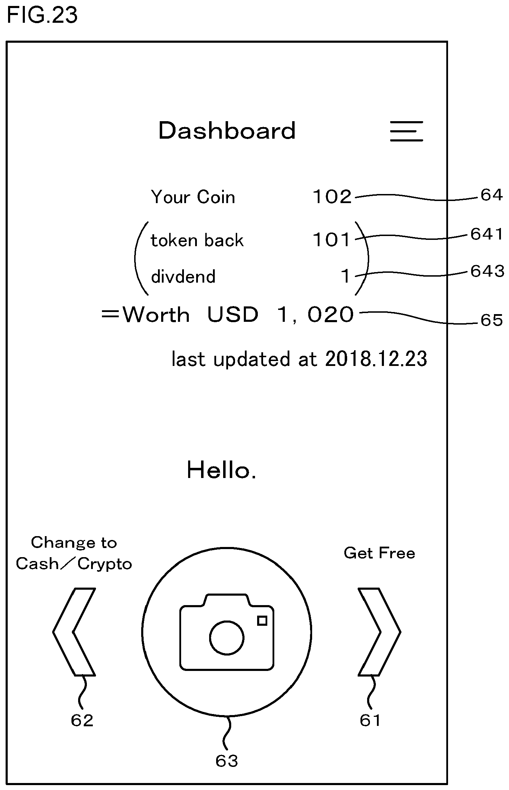

FIG. 23 is an explanatory view illustrating an example of a top screen according to the third embodiment. As in FIGs. 6, 9 and 18, the top screen illustrated in FIG. 23 displays the holding quantity of the tokens held by the user. On the top screen, the holding quantity 64 of the tokens currently held by the user and the amount equivalent to the legal currency 65 when the tokens are converted into the legal currency complying with the user's nationality are displayed. The breakdown of the holding quantity 64 of the tokens is displayed. A holding quantity by the tokenback 641 and a holding quantity by the dividend coins 643 are displayed.

According to the third embodiment, in the case where the user holding the tokens takes a certain action, dividend coins are granted as a reward, which motivates the user to continue holding the tokens. This makes it possible to secure users who hold tokens for a long time. In addition, in the case where a log-in action is employed as a certain action, the user is expected to purchase a commodity or the like at a member shop in order to further increase the tokens when logging into the system.

In the present embodiment, the exchange of tokens is prohibited for a predetermined period in the case where the dividend coins are received. In other words, it is prohibited to convert tokens into legal currency or other virtual currencies through the link screen illustrated in FIG. 10 described above.

Though a certain action of the user who receives a reward corresponds to logging into the token back system in the description above, it is not limited thereto. In the case where a commodity or the like is purchased twice a day (within 24 hours) at a member shop and the purchase amount of the commodities or the like exceeds a predetermined amount, dividend coins may be granted in addition to tokenback. Though in the present embodiment, a reward is conferred in the case where the user takes a certain action, tokens may be granted by staking in addition thereto. Staking is a mechanism that allows the user to put a token in a wallet without using it and to receive rewards if the user participates in blockchain operation. Since the staking is the well-known art, the description is not made here. While logging into the token back system is described as a certain action to be taken by the user that confers a reward, in the case of employing smartphone as the terminal 2, a log-in state can be maintained even if the application is closed. Here, launching the application with the terminal 2 by the user and accessing the tokenback system may be stored as log data, and dividend coins may be granted to the user based on the log data. Since application launches may occur more frequently than log-in operations, dividend coins may be granted for the first login or first application launch per day, and no dividend coins may be granted for the second login or application launch and thereafter.

### (Fourth Embodiment)

The present embodiment describes a case where buyback guarantee is granted for a predetermined period for the tokens granted to the user.

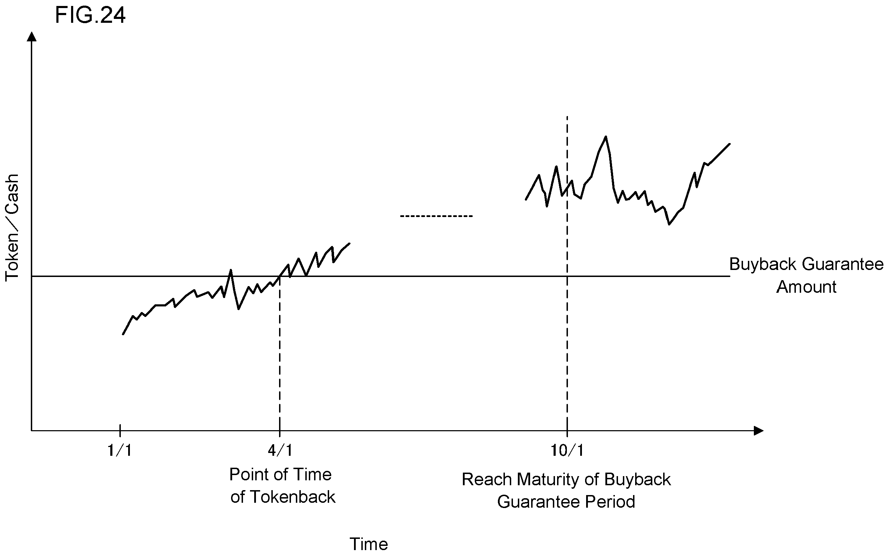

FIG. 24 is an explanatory view illustrating an outline of the fourth embodiment. With reference to FIG. 24, the outline of the present embodiment will be described.

In the first embodiment, while the tokens according to the present system are not aimed at consumption, they are procured from the market based on the commissions from the member shops, and tokens are granted according to the users' holding information, thereby encouraging long-time holding and creating demands for tokens to enhance the value. In the present embodiment, the user is provided with buyback guarantee such that for the granted tokens, during a predetermined buyback guarantee period, the tokens are bought back with a predetermined buyback amount (exchange amount). This makes it possible to further encourage long-time holding of tokens to thereby relatively increase the value of the tokens.

For example, the server 1 accepts a request to exchange the granted tokens for the legal currency, from the terminal 2 of each user. Specifically, the server 1 accepts a designation input to designate the quantity of tokens to be exchanged. The server 1 may accept an exchange request input not from the terminal 2 of the user but, for example, manually from an operator having received an inquiry from the user.

If an exchange request is accepted, the server 1 specifies the point of time of granting the tokens having been granted to the user. For example, with reference to the grant history DB 146, the server 1 identifies the transactions of the tokens having been approved by the member shop and not having undergone exchange based on the buyback guarantee in the past. The server 1 then specifies the point of time of token grant (for example, the point of time when approval is accepted from the member shop) by each transaction. The server 1 determines whether or not the point of time of token grant by each transaction is within a predetermined period from the present time (point of time when the exchange request is accepted).

For example, the server 1 extracts a user-designated quantity of tokens in order from the tokens whose granting points of time are earlier among the tokes determined to be within the predetermined period. The server 1 regards the extracted tokens as targets of exchange. For example, the server 1 may output the transactions of the tokens determined to be within the predetermined period in the form of a list to the terminal 2 and make the user select the transaction to be the target of exchange.

The server 1 obtains the information on the current price of the tokens and calculates the exchange amount (buyback guarantee amount) of the tokens. For example, the server 1 obtains the current price information at the point of time of token grant so that the price is the same as that at the point of time when the tokens were granted, and calculates the amount obtained by converting the tokens into the legal currency according to the current price at the point of time of the token grant.

Though tokens are bought back at the same price as that at the point of time of token grant in the present embodiment, the exchange amount is not necessarily the same as the price at the point of time of the token grant. For example, the server 1 may make the exchange amount the price lower than that at the point of time of the token grant (for example, 90% of the amount) in order to further encourage long-time holding. Moreover, since a commission or the like occurs at the exchange at the time of token buyback, the amount obtained by subtracting the commission may be made the exchange amount.

The server 1 notifies the terminal 2 of the exchange amount, and accepts an approval input from the terminal 2 as to whether or not exchange with the exchange amount is approved. If the exchange amount is approved, the server 1 notifies the wallet address as the destination of token sending and prompts the user to send the specified tokens. After confirming the user sending the tokens, the server 1 performs processing related to the sending of the legal currency corresponding to the exchange amount (for example, request for sending to a financial institution). This completes the token buyback.

In the case where the exchange amount is notified to the terminal 2 in the above, preferably, not only the exchange amount merely based on buyback guarantee is presented but also the market price of the tokens at the present time, that is, the exchange amount when the tokens are exchanged at the trading market (second exchange amount) is calculated and the difference therebetween is presented to the user.

That is, the server 1 obtains the information on the current price of the tokens at the present time (the point of time when an exchange request is accepted) from the exchange server 3, and calculates the exchange amount obtained by converting the tokens into the legal currency according to the current price at the present time. Explaining according to the example of FIG. 24, when the point of time of grant is April 1, the amount obtained by converting the tokens with the current price at the present time when the exchange request is accepted (for example, as of October 1 which is the expiration date) is calculated separately from the exchange amount calculated with the current price of April 1. For example, the server 1 notifies the terminal 2 of the amounts of both and of the difference in amount (difference) therebetween, and presents them to the user, which allows the user to suitably determine whether or not exchange (buyback) based on buyback guarantee is to be performed.

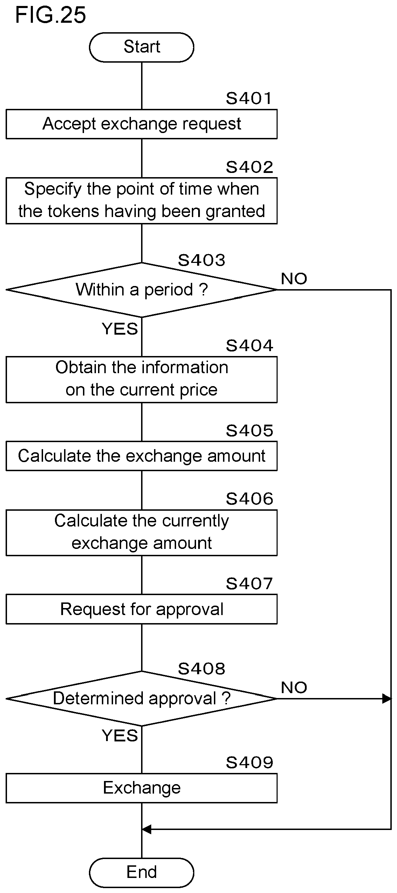

FIG. 25 is a flowchart showing an example of the processing procedure to be executed by the tokenback system according to the fourth embodiment. The control unit 11 of the server 1 accepts a token exchange request from the terminal 2 (step S401). If an exchange request is accepted, the control unit 11 specifies the point of time when the tokens having been granted to the user is granted (step S402).

The control unit 11 determines whether or not the point of time when the exchange request is accepted at step S401 is within a predetermined period from the point of time of the token grant specified at step S402 (step S403). If determining that it is not within the predetermined period (S403:NO), the control unit 11 ends the series of processing. If determining that it is within the predetermined period (S403: YES), the control unit 11 obtains the information on the current price of the tokens (step S404). For example, the control unit 11 obtains the current price information at the point of time of the token grant and the present time (the point of time when the exchange request is accepted).

Based on the obtained current price information, the control unit 11 calculates the token exchange amount according to the current price at the point of time of the token grant (step S405). Moreover, the control unit 11 calculates the exchange amount (second exchange amount) obtained by converting the tokens into the legal currency according to the current price at the present time (step S406). The control unit 11 requests for approval of token exchange (step S407). For example, the control unit 11 outputs the token exchange amount based on the current price at the point of time of the token grant and outputs the exchange amount based on the current price at the present time, and presents the difference therebetween to the user. After presenting these two amounts, the control unit 11 accepts a final approval.

The control unit 11 determines whether or not token exchange is approved (step S408). If determining that it is not approved (S408: NO), the control unit 11 ends the series of processing. If determining that it is approved (S408: YES), the control unit 11 performs processing related to token exchange (step S409) and ends the series of processing.

Though the buyback guarantee period is a predetermined period and the buyback guarantee amount (exchange amount) is a predetermined amount according to the current price in the description given above, for example, the server 1 may vary the guarantee period and the guarantee amount based on the token holding information by the user. For example, in the case where tokens are granted to the user, the server 1 sets the guarantee period and the guarantee amount according to the user's token holding quantity and holding period and stores the setting contents into the grant history DB 146. The server 1, for example, sets a longer guarantee period and a larger guarantee amount as the holding quantity increases and the holding period is elongated, which further encourages long-time holding of tokens. If the exchange request is accepted, the server 1 refers to the setting contents stored in the grant history DB 146 and if it is within the set buyback guarantee period, the server 1 performs exchange with the set buyback guarantee amount.

Though tokens are exchanged for the legal currency in the description given above, tokens may be exchanged for, for example, an alternative other than the legal currency such as electronic points or an article. That is, it is necessary only that the tokens granted to the user can be exchanged for an alternative equivalent to the exchange amount according to the current price at the point of time of grant, and the alternative is not limited to the legal currency.

Though a predetermined guarantee period is provided for token buyback in the above, it is not always necessary to provide the guarantee period. That is, the buyback guarantee may be provided irrespective of the elapsed time from the point of time of token grant to the point of time when an exchange request is accepted.

Though the exchange amount is determined according to the current price at the point of time of grant in the description above, tokens may be exchanged with a predetermined exchange amount irrespective of the current price at the point of time of grant.

From the above, according to the fourth embodiment, long-time holding of tokens is encouraged to further increase the value.

Moreover, according to the fourth embodiment, by presenting the difference between the buyback guarantee amount (exchange amount) and the price at the present time, the user can suitably determine whether or not exchange is to be performed.

In addition, according to the fourth embodiment, by setting the buyback guarantee period and the buyback amount according to the holding information such as the holding quantity and the holding period, long-time holding of tokens can more suitably be encouraged.

### (Variants)

The buyback guarantee of the cryptocurrency granted to the user was described in the fourth embodiment. An example of the display when the buyback guarantee amount is displayed on the terminal 2 will be described below.

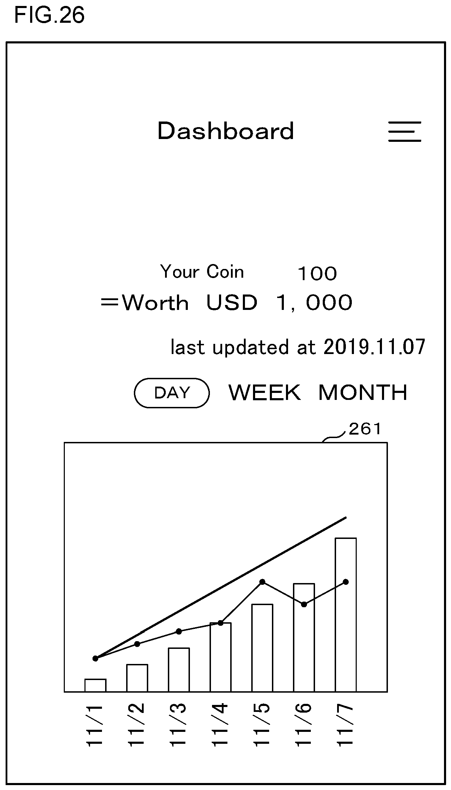

FIG. 26 is an explanatory view illustrating an example of a top screen according to the variant. The top screen of FIG. 26 includes a graph 261. The graph 261 is a graph showing in time series the buyback guarantee amount (exchange amount) obtained by converting the tokens held by the user at each point of time in the past according to the current price at the point of time of grant and the exchange amount (second exchange amount) obtained by converting the tokens according to the current price at each point of time. The terminal 2, for example, displays, as vertical bars, the quantity of tokens held by the user at each point of time in the past, and displays, as lines, the buyback guarantee amount obtained by converting the tokens according to the current price at the point of time of grant and the exchange amount obtained by converting the tokens according to the current price at each point of time. In the graph 261 of FIG. 26, the buyback guarantee amount is indicated with a thick line and the exchange amount according to the current price at each point of time is indicated with a thin line. The thick line indicates the amount in the case where the tokens are exchanged by using the buyback guarantee. The thin line indicates the amount in the case where the tokens are exchanged at a general trading market without the use of the buyback guarantee.

When the terminal 2 displays the top screen, the server 1 calculates the exchange amounts of both of them at each point of time in the past, and outputs the graph 261. In the case of calculating the buyback guarantee amount, for each point of time, the server 1 multiplies the quantity of tokens granted before that point of time by the current price at the point of time of grant, and accumulates the multiplication values to thereby calculate the buyback guarantee amount. In the case of calculating the exchange amount (second exchange amount) when the buyback guarantee is not used, for each point of time in the past, the server 1 multiplies the quantity of tokens held by the user at that point of time by the current price of the cryptocurrency at that point of time, to thereby calculate the exchange amount. The server 1 calculates the exchange amounts of both of them for each point of time in the past (each date of the last one week in FIG. 26) and displays them as the graph 261 on the terminal 2. From the graph 261, the user can easily confirm that the buyback guarantee of the tokens is maintained through comparison with the market price.

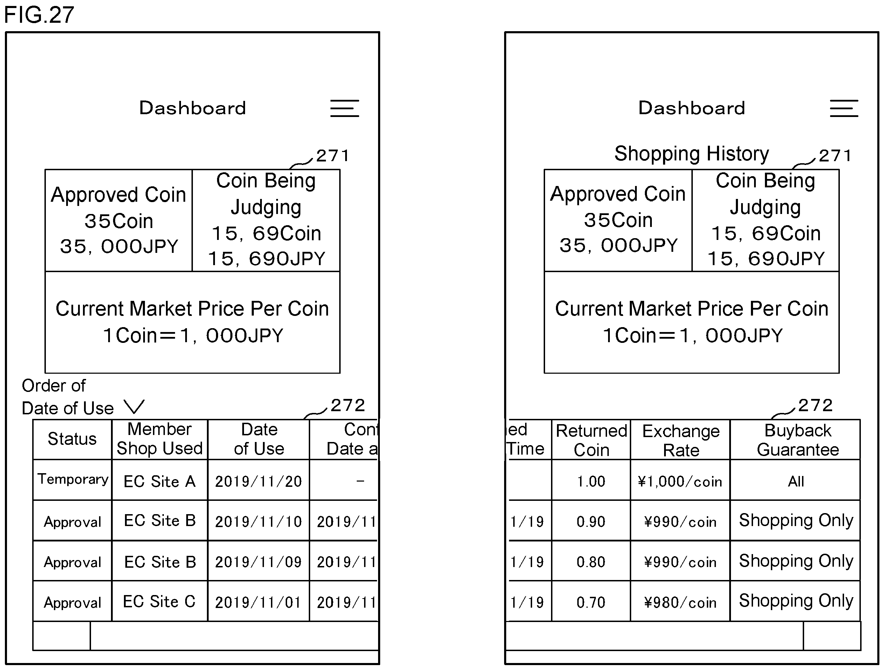

FIG. 27 is an explanatory view illustrating an example of a grant history screen. The grant history screen is a display screen displaying the token grant history. In the case where a specific menu operation is accepted from another screen, the terminal 2 shifts to the grant history screen of FIG. 27.

The grant history screen includes a granted token display field 271 and a grant history display field 272. The granted token display field 271 is a display field displaying the holding quantity of the tokens currently held by the user and the current price. "Under determination" indicates a condition where an approval from the member shop is being waited.

The grant history display field 272 is a display field displaying the quantity of tokens granted to the user, the current price at the point of time of grant and the like in association with the purchase information of the commodity or the like as a trigger of token grant. For each purchase information as the trigger of token grant, the terminal 2 lists, in the grant history display field 272, the quantity of tokens granted according to the purchase amount of the commodity or the like and the current price at the point of time of grant at which buyback is guaranteed.

Specifically, the terminal 2 displays the grant date ("fixed date" in FIG. 27), the quantity of granted tokens ("returned coin"), the current price at the point of time of grant ("exchange rate") and the like in association with the name of the member shop where the commodity or the like was purchased, the purchase date (date of use) and the like. "Status" indicates whether or not approval has been received. By referring to the grant history display field 272, the user may easily grasp the date of grant as well as the buyback guarantee for each token in association with the purchase history of the commodities or the like.

Since the present variant is common to the first to fourth embodiments except for the above-described screen display, flowcharts and other detailed descriptions are not made here.

### (Second Variant)

The third embodiment described an example where dividend coins are granted to the user who takes a certain action. The fourth embodiment described the buyback guarantee of the cryptocurrency granted to the user. The following describes an example of display when the dividend coins and the buyback guarantee amounts are displayed on the terminal 2 when the third embodiment and the fourth embodiment are combined.

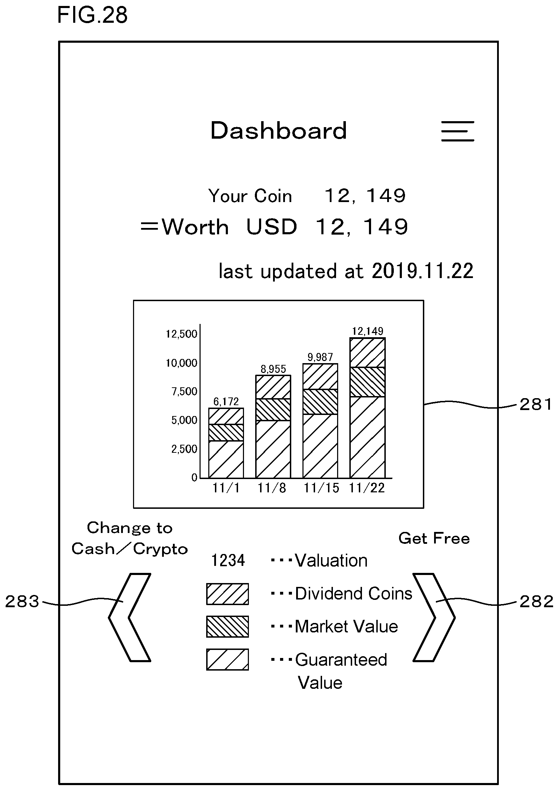

FIG. 28 is an explanatory view illustrating an example of a top screen according to the second variant. The top screen (asset screen) in FIG. 28 includes a graph 281. The vertical axis of the graph 281 indicates the amount equivalent to legal currency. The unit is, for example, the US dollar. The horizontal axis of the graph 281 indicates the time series. The graph 281 is a graph showing in time series the evaluation amount (dividend coins) of the interest obtained by converting the tokens held by the user at each point of time in the past according to the current price at the point of time of grant, the buyback guarantee amount obtained by converting the tokens according to the current price at each point of time and the exchange amount obtained by converting the tokens according to the current price at each point of time. The graph 281 is displayed in three layers including the bottom layer indicating the buyback guarantee, the middle layer indicating the difference between the exchange amount and the buyback guarantee amount and the upper layer indicating the evaluation amount of the interest. The numerals above the graphs each indicate the sum of the three amounts. The sum-up amount is the quantity of tokens held by the user in the amount equivalent to legal currency.

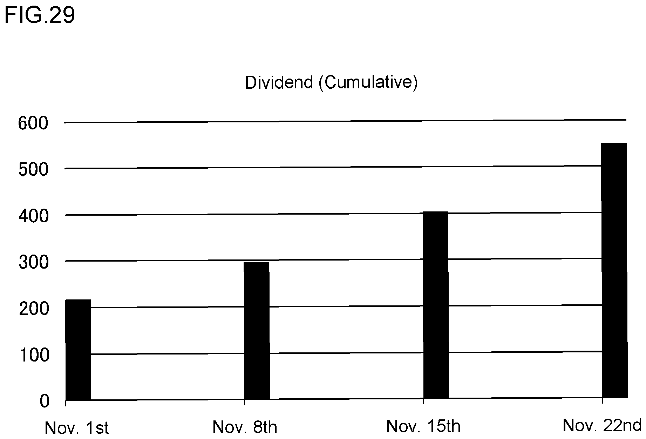

When a dividend coin evaluation amount display 282 (display area) is selected on the top screen of FIG. 28, a dividend screen indicating the cumulative value of the evaluation amounts by the dividend coins is displayed. FIG. 29 is an explanatory view illustrating an example of the dividend screen. The dividend screen is illustrated by extracting only the evaluation amounts of the dividend coins from the graph 281 in FIG. 28 for display. The vertical axis of the graph in FIG. 29 represents the amount equivalent to legal currency, and the horizontal axis represents the date indicating the time series.

When the terminal 2 displays the top screen, the server 1 calculates the evaluation amount, the buyback guarantee amount and the exchange amount of the dividend coins at each point of time in the past, and outputs the graph 281 thereof. In the case of calculating the buyback guarantee amount, for each point of time, the server 1 multiplies the dividend coins granted before that point of time by the current price at the point of time of grant, and accumulates the multiplication values to thereby calculate the evaluation amount of the dividend coins. For each point of time, the server 1 multiplies the quantity of tokens granted before that point of time by the current price at the point of time of grant and accumulates the multiplication values to thereby calculate the buyback guarantee amount. Moreover, in the case of calculating the exchange amount when the buyback guarantee is not used, for each point of time in the past, the server 1 multiplies the quantity of tokens held by the user at that point of time by the current price of the cryptocurrency at that point of time, to calculate the exchange amount.

From the graph 281, the user can easily confirm that the buyback guarantee of the tokens is maintained through comparison with the market price. In addition, from the dividend screen illustrated in FIG. 29, the user can confirm that the holding quantity by the interest increases by continuous holding of the tokens.

### (Fifth Embodiment)

The present embodiment is an example where tokens are granted to the user who introduced the tokenback system, as in the second embodiment. The present embodiment is different from the second embodiment in the condition for granting tokens.

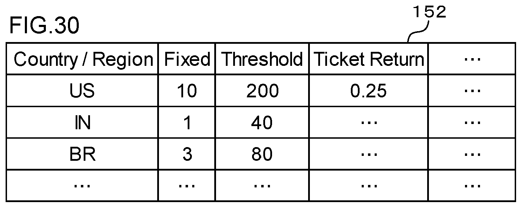

FIG. 30 is an explanatory view illustrating an example of the record layout of a bonus setting DB. The bonus setting DB 152 stores the settings for tokens obtained when the tokenback system is introduced. Hereafter, such tokens are also referred to as a bonus. The bonus setting DB 152 includes a country/region column, a fixed column, a threshold column and a ticket return column. The country/region column stores the country or region to which the system is applied. The determination of the applicable country or region is made based on the country or region where a second user resides. The country or region where a user resides is stored in the user DB 141. FIG. 30 represents the country or region by the two-letter code. US stands for the United States, IN stands for India, and BR stands for Brazil. The fixed column stores a bonus granted to the first user when the first user invites the second user to the tokenback system. The bonus (hereinafter referred to as a fixed bonus) cannot be withdrawn at the beginning of the grant, and can be withdrawn if a predetermined condition is met. The threshold column stores an example of a predetermined condition. When the second user makes a purchase at a member shop and the total amount of purchase approved by the member shop exceeds a threshold recorded in the threshold column, the fixed bonus granted to the first user can be withdrawn. The ticket return column stores, if the second user purchases a ticket that can be purchased with tokens, the return rate of the bonus granted to the first user. The amount of the bonus is calculated by multiplying the amount of the ticket purchased by the return rate.

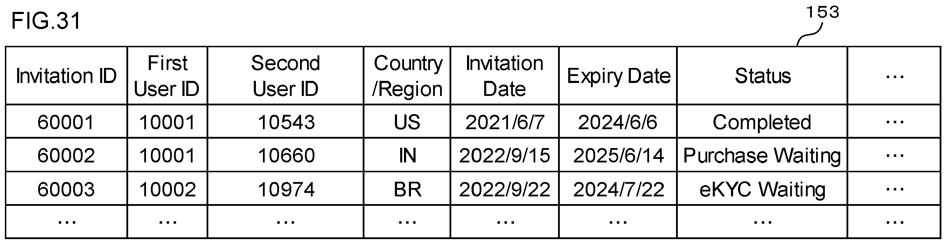

FIG. 31 is an explanatory view illustrating the record layout of a status recording DB. The status recording DB 153 stores the progress of the invitation. The status recording DB 153 includes an invitation ID column, a first user ID column, a second user ID column, a country/region column, an invitation date column, an expiry date column and a status column. The invitation ID column stores invitation IDs respectively assigned to invitation information indicating the first user inviting the second user. The first user ID column stores the user IDs of the first users having invited other users. The second user ID column stores the user IDs of the second users having accepted invitation from other users. The country/region column stores the country or region corresponding to the residences of the second users. The invitation date column stores the date when the first user invites the second user. The expiry date column stores the expiry date until which the first user can obtain a bonus. Here, three years from the date of the invitation is set. The status column stores the status of the second user. There are, for example, four statuses including eKYC waiting, waiting for purchase, completed and expired. The status "eKYC waiting" indicates the status after the second user receives the invitation until performing user registration and completing the personal identification procedure. The status "purchase waiting" indicates the status after the second user completes the personal identification procedure until making a purchase at the member shop up to the total amount of purchase approved by the member shop equivalent to a threshold. The status "completed" indicates the status from when the second user makes a purchase at the member shop and the total amount of purchase approved by the shop reaches the threshold until the expiry date for the first user to obtain a bonus is reached. The status "expired" indicates that the deadline for the first user can obtain a bonus has been reached. Note that eKYC means that KYC (know your Customer: personal identification) is performed online.

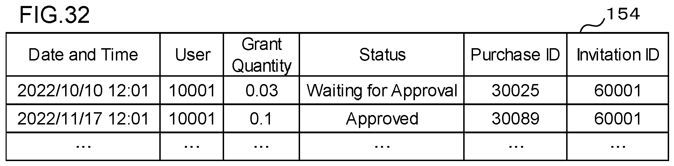

FIG. 32 is an explanatory view illustrating the record layout of a linked bonus DB. The linked bonus DB 154 stores a bonus to be granted to the first user when the second user makes a purchase. The linked bonus DB 154 includes a date and time column, a user column, a grant quantity column, a status column, a purchase ID column and an invitation ID column. The date and time column stores the date and the time when the second user made a purchase at the member shop. The user ID column stores user IDs of the first users. The grant quantity column stores the quantity of tokens granted as a bonus. The status column stores the status of the purchase by the second user. The waiting for approval indicates that an approval from the member shop is waited. Here, the bonus cannot be withdrawn. The approved indicates that an approval of purchase from the member shop is received. Here, the bonus can be withdrawn. The purchase ID column stores the purchase IDs that specify the purchase history. The invitation ID column stores the invitation IDs issued when the second users are invited.

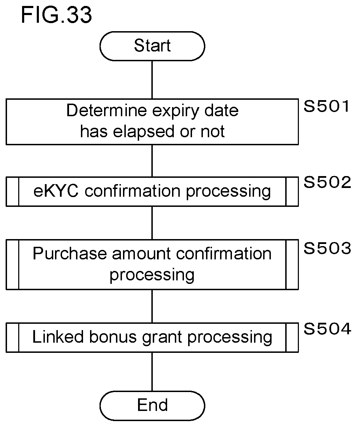

FIG. 33 is a flowchart showing an example of the procedure for bonus grant processing. The bonus grant processing is executed repeatedly as batch processing such as daily batch processing. The control unit 11 of the server 1 determines whether or not the expiry date has elapsed for the status recording DB 153 (step S501). The control unit 11 extracts the records other than the ones indicating "expired" in the status column of the status recording DB 153. The control unit 11 performs the following processing for each of the extracted records. The control unit 11 compares the expiry date stored in the expiry date column with the current date and determines whether the current date is on the expiry date or after the expiry date. If determining that the current date is on the expiry date or after the expiry date, the control unit 11 updates the value in the status column to "expired." If determining that the current date is before the expiry date, the control unit 11 proceeds to the next record without doing nothing for the target record. If processing for all the extracted records is finished, the control unit 11 performs eKYC confirmation processing (step S502).

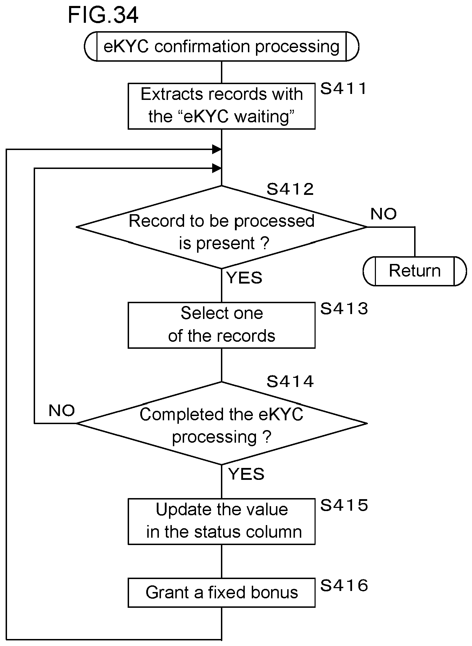

FIG. 34 is a flowchart showing an example of the procedure for the eKYC processing. The control unit 11 extracts records with the "eKYC waiting" in the status column of the status recording DB 153 (step S411). The control unit 11 determines whether or not any record to be processed, having been extracted, is present (step S412). If determining that a record to be processed is present (YES at step S412), the control unit 11 selects one of the records to be processed (step S413). The control unit 11 determines whether or not the second user corresponding to the selected record has completed the eKYC processing (step S414). The control unit 11 obtains the user ID stored in the second user ID column of the selected record. The control unit 11 determines whether or not the second user has completed the eKYC processing by referring to the user DB 141 with the user ID as the key. The user DB 141 has stored information on whether or not each user has completed the eKYC processing. If determining that the second user has completed the eKYC processing (YES at step S414), the control unit 11 updates the value in the status column of the status recording DB 153 from "eKYC waiting" to "purchase waiting" (step S415). The control unit 11 grants a fixed bonus to the first user (step S416). The control unit 11 searches the bonus setting DB 152 with the value in the country/ region column of the selected record as the key and obtains the value in the fixed column of the hit record. The control unit 11 grants the obtained quantity of bonus to the first user. At this point, the bonus cannot be withdrawn. The control unit 11 returns the processing to step S412 to perform processing on the unprocessed records. If determining that the second user has not completed the eKYC processing (NO at step S414), the control unit 11 returns the processing to step S412 to perform processing on the unprocessed records. If determining that there is no record to be processed (NO at step S412), the control unit 11 calls the processing to return it to the original.

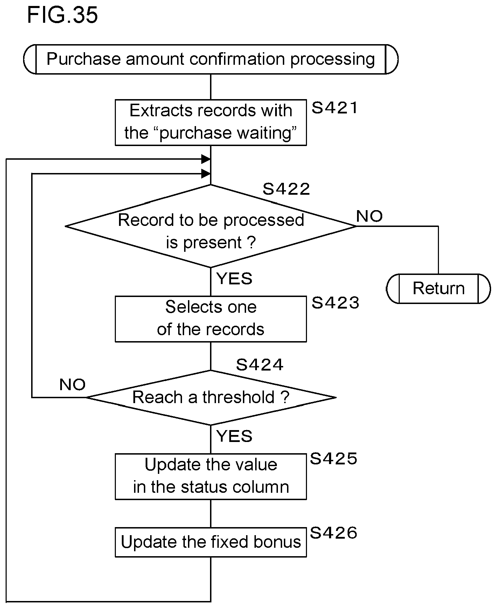

Returning to FIG. 33, the control unit 11 performs purchase amount confirmation processing (step S503). FIG. 35 is a flowchart showing an example of the procedure for the purchase amount confirmation processing. The control unit 11 extracts records with the "purchase waiting" in the status column of the status recording DB 153 (step S421). The control unit 11 determines whether or not a record to be processed, having been extracted, is present (step S422). If determining that a record to be processed is present (YES at step S422), the control unit 11 selects one of the records to be processed (step S423). The control unit 11 determines whether or not the total of the purchase amount of commodities or service at a member shop by the second user corresponding to the selected record reaches a threshold (step S424). The control unit 11 searches the purchase history DB 144 using the user ID of the second user as a key. The control unit 11 adds the values in the purchase amount column of the records that are sought and hit to calculate the total amount of the commodities and service at the member shop of the second user. The control unit 11 searches the bonus setting DB 152 with the value in the country/region column of the selected record as the key and obtains the value in the threshold column of the hit record. The control unit 11 determines whether or not the calculated total amount reaches the obtained threshold. If determining that the total amount for the second user reaches the threshold (step S424: YES), the control unit 11 updates the value in the status column of the status recording DB 153 from "purchase waiting" to "completed" (step S425). The control unit 11 updates the fixed bonus granted to the first user (step S426). The control unit 11 updates the status of the fixed bonus from non-withdrawal to withdrawal. The control unit 11 returns the processing to step S422 to perform the processing on the unprocessed records. If determining that the total amount of the purchase by the second user does not reach the threshold (NO at step S424), the control unit 11 returns the processing to step S422 to perform processing on the unprocessed record. If determining that there is no record to be processed (NO at step S422), the control unit 11 calls the processing to return it to the original.

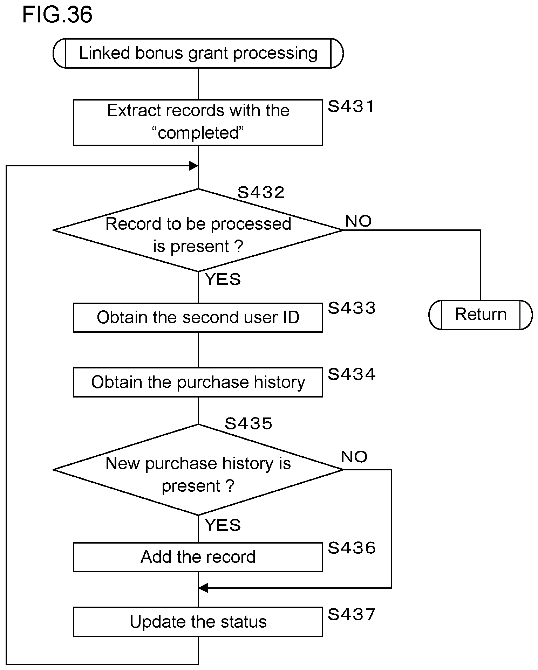

Returning to FIG. 33, the control unit 11 performs the linked bonus grant processing (step S504). FIG. 36 is a flowchart showing an example of the procedure for the linked bonus grant processing. The control unit 11 extracts records with the "completed" in the status column of the status recording DB 153 (step S431). The control unit 11 determines whether or not a record to be processed, having been extracted, is present (step S432). If determining that a record to be processed is present (YES at step S432), the control unit 11 selects one of the records to be processed and obtains the second user ID from the second user ID column of the selected record (step S433). The control unit 11 searches the purchase history DB 144 with the user ID of the second user as the key and obtains the purchase history (step S434). The control unit 11 determines whether or not a new purchase history is present (step S435). The control unit 11 compares the purchase ID of the purchase history obtained at step S434 and the purchase ID stored in the linked bonus DB 154 and determines the history with the purchase ID not included in the linked bonus DB 154 as a new purchase history. If determining that no new purchase history is present (NO at step S435), the control unit 11 advances the processing to step S437. If determining that a new purchase history is present (YES at step S435), the control unit 11 adds the record corresponding to the new purchase history to the linked bonus DB 154 (step S436). The control unit 11 sets "waiting for approval" to the value in the status column of the record to be added. The control unit 11 updates the status (step S437). The control unit 11 selects records with the "waiting for approval" in the status column of the linked bonus DB 154. The control unit 11 performs the following processing for each of the selected records. The control unit 11 determines whether or not the member shop approves the token back to the second user by referring to the purchase history DB 144 with the purchase ID as the key. Note that the information on whether or not the member shop approves the tokenback is assumed to be stored in the purchase history DB 144. If determining that the member shop approves the token back, the control unit 11 updates the value in the status column of the linked bonus DB 154 to "Approved." If determining that the member shop does not approve the token back, the control unit 11 shifts to the processing on another record without performing any processing. If completing the processing for all the selected records, the control unit 11 returns the processing to step S432. The control unit 11 returns the processing to step S432 to perform processing on the unprocessed records. If determining that no record to be processed is present (NO at step S432), the control unit 11 calls the processing and returns it to the original. The control unit 11 returns to FIG. 33 to end the bonus grant processing.

In the present embodiment, the following effect is produced. The first user intends to invite the second user to the tokenback system, which can increase the number of users in the tokenback system.

In the description above, in the case where the first user invites the second user, and the second user makes a purchase at a member shop, a bonus is granted to the first user though the condition of bonus provision is not limited thereto. In the case where the second user purchases a ticket that allows participation in the game with tokens in the tokenback system, a bonus may be granted to the first user. The quantity of tokens to be granted is the amount obtained by multiplying the ticket price by the return rate. The return rate uses the values in the ticket return rate column of the bonus setting DB 152.

The action taken by the second user that allows a bonus to be granted to the first user is not limited to purchasing at the member shop or purchasing a ticket. A bonus may be granted to the first user in the case where the second user invites a third user to the tokenback system and the third user completes the eKYC processing.

The period during which the first user can receive the bonus is set to three years after the first user invited the second user though it is not limited thereto. The period may be extended by the first user paying a predetermined quantity of tokens.

Since the first user can obtain a bonus without doing anything himself or herself through economic activities performed by the second user, the right to invite others to the system, which is promised to be given a bonus, has a certain value. Hence, the right to invite others may be sold in the tokenback system as a content that can be purchased with tokens. Though conditions for obtaining a linked bonus include making a purchase at a member shop and purchasing a ticket to play a game, as examples, they may be sold as separate contents.

The technical features (constituent features) in the embodiments can be combined with each other, and the combination can form a new technical feature. It is to be understood that the embodiments disclosed here is illustrative in all respects and not restrictive. The scope of the present invention is defined by the appended claims, and all changes that fall within the meanings and the bounds of the claims, or equivalence of such meanings and bounds are intended to be embraced by the claims.
In addition, independent claims and dependent claims described in the appended claims may be combined with each other in all combinations regardless of a citing format. although the appended claims use a format in which a claim cites two or more different claims (multi-claims format) in description, but there is no limitation thereto. a multi-claim format that cites at least one multi-claim (multi-multi-claim) may be used in description.

### [Description of Reference Codes]

1 server (information processing apparatus)
11 control unit
12 main storage unit
13 communication unit
14 auxiliary storage unit
P1 program
141 user DB
142 member shop DB
143 recipient DB
144 purchase history DB
145 posting history
146 grant history DB
147 invitation DB
148 invitation grant history DB
149 dividend DB
150 exchange limit DB
151 interest rate DB
152 bonus setting DB
153 status recording DB
154 linked bonus DB
2 terminal (first terminal)
21 control unit
22 main storage unit
23 communication unit
24 display unit
25 input unit
26 image taking unit
27 auxiliary storage unit
P2 program
3 exchange server
4 EC server
5 issuing server

## Claims

1. An information processing method causing a computer to execute processing of
issuing, to a first user, invitation information for inviting a second user;
obtaining the invitation information from the second user;
generating information on debt indicating that cryptocurrency is to be granted to the first user or the second user; and
granting the cryptocurrency according to the debt in a case where a history indicative of the second user taking a predetermined action is obtained.

2. The information processing method according to claim 1, wherein the predetermined action includes the second user making a purchase for a predetermined amount or higher at a predetermined real shop or EC site.

3. The information processing method according to claim 2, wherein, in a case where an amount of purchase made by the second user reaches the predetermined amount, quantity of the cryptocurrency corresponding to an amount that exceeds the predetermined amount is granted to the first user.

4. The information processing method according to claim 3, wherein the quantity of the cryptocurrency is granted to the first user based only on the purchase within a predetermined period.

5. The information processing method according to claim 1, wherein the predetermined action includes the second user purchasing a ticket for playing a game with the cryptocurrency.

6. The information processing method according to claim 1, wherein the cryptocurrency is granted to the first user and the second user.

7. The information processing method according to any one of claims 1 to 6, wherein the information on the debt is deleted in a case where the history is not obtained after a lapse of a predetermined period from occurrence of the debt.

8. The information processing method according to any one of claims 1 to 6, wherein grant quantity according to the debt of the cryptocurrency is varied depending on holding quantity of the cryptocurrency held by the first user or the second user or an attribute of the first user or the second user.

9. The information processing method according to any one of claims 1 to 6, wherein a value obtained by adding the grant quantity according to the debt to the holding quantity is output so as to be displayed in a case where a request to display holding quantity of the cryptocurrency is obtained from the first user or the second user.

10. The information processing method according to any one of claims 1 to 6, wherein the holding quantity and the grant quantity according to the debt are output so as to be discernibly displayed in a case where a request to display holding quantity of the cryptocurrency is obtained from the first user or the second user.

11. A program causing a computer to execute processing of issuing, to a first user, invitation information for inviting a second user;
obtaining the invitation information from the second user;
generating information on debt indicating that cryptocurrency is to be granted to the first user or the second user; and
granting the cryptocurrency according to the debt in a case where a history indicative of the second user taking a predetermined action is obtained.

12. An information processing apparatus, comprising:
an issuance unit that issues, to a first user, invitation information for inviting a second user;
an obtainment unit that obtains the invitation information from the second user;
a generation unit that generates information on debt indicating that cryptocurrency is to be granted to the first user or the second user; and
a grant unit that grants the cryptocurrency according to the debt in a case where a history indicative of the second user taking a predetermined action is obtained.
